# DEMANDE DE BREVET EUROPEEN

(11) **EP 4 005 937 A2**
(43) Date de publication de la demande: **01.06.2022**
(21) Numéro de dépôt: 21208811.6
(22) Date de dépôt: 17.11.2021
(51) Int. Cl.: B65B 43/12, B65B 43/40, B65B 69/00, B25J 11/00, B25J 9/00, B25J 19/02, B25J 15/02, B65B 23/16, B65B 43/26, B65G 47/06, B65G 47/90, B65G 59/00, B65G 59/02, B65G 61/00, B65G 47/91, B65G 59/04

(54) **PROCÉDÉ ROBOTISÉ DE CHARGEMENT D'ÉTUIS**

(30) Priorité: 25.11.2020 FR 2012116
(71) Demandeur: Velec Systemes, 59910 Bondues (FR)
(72) Inventeur: GHESTEM, Florian, 59910 Bondues (FR)
(74) Mandataire: Plasseraud IP

(57) **Abrégé**

L'invention est relative à un procédé robotisé de chargement d'étuis sur une ligne d'emballage à partir d'étuis contenus dans un conteneur parallélépipédique fermé et dans lequel on procède au chargement de la ligne d'emballage , après ouverture du conteneur (Ca) par :
- /d/ insertion d'un premier mors (30) de la pince entre la première face (F1) du conteneur et le premier étui (Et1) de la rangée d'étuis et, insertion d'un deuxième mors (31) de la pince entre le dernier étui (Etd) de la rangée d'étuis et la deuxième face (F2) du conteneur, et rapprochement des mors jusqu'à agripper la rangée d'étuis,
- /e/ pilotage du bras robotisé de sorte à extraire la rangée d'étuis du conteneur saisie par la pince motorisée (3) et à charger la ligne d'emballage (Lg) avec la rangée d'étuis.

## Description

La présente divulgation est relative à un procédé robotisé de chargement d'étuis sur une ligne d'emballage à partir d'étuis contenus dans un conteneur parallélépipédique fermé, tel qu'un carton.

### Domaine technique

La présente divulgation relève du domaine des emballages alimentaires, tels que biscuits ou autre.

Les produits alimentaires sont typiquement conditionnés dans un emballage primaire (plastique), qui est lui-même conditionné dans un étui cartonné.

Cet étui en carton est formé d'un flan de carton, rainuré, et découpé, puis collé, pour former les faces de l'étui tubulaire, y compris des volets pour la fermeture d'au moins une embouchure de l'étui à l'une des extrémités tubulaires de l'étui.

Cet étui comporte quatre lignes de pliage, permettant le stockage à plat de l'étui par pliage de l'étui dans une position à plat autour de ses quatre lignes de pliage, puis son dépliage autour des lignes de pliage pour sa mise en volume.

Dans les lignes alimentaires, les étuis sont livrés sur des palettes, dans des cartons recevant une rangée d'étuis stockés à plat dans le carton, parallèlement les uns aux autres, à la verticale, à savoir en appui sur leur chant sur le fond du carton.

Ces étuis sont destinés à alimenter le convoyeur d'une ligne de conditionnement connu par l'homme du métier sous le nom d'« *Etuyeuse* »*.*

A chaque coup de l'étuyeuse, le convoyeur avance et permet à deux préhenseurs à ventouse d'un premier poste de l'étuyeuse de venir se saisir de deux faces opposées de l'étui (alors à plat), puis les deux préhenseurs sont configurés pour s'écarter afin d'assurer la mise en volume de l'étui autour de ses lignes de pliage.

Une fois l'étui ouvert, un second poste de l'étuyeuse vient charger l'étui du produit alimentaire par son ouverture laissée ouverte par les volets de fermeture.

Un troisième poste de l'étuyeuse vient alors rabattre et coller les volets pour assurer la fermeture de l'étui.

### Technique antérieure

Dans le domaine alimentaire, par exemple dans les biscuiteries industrielles, les étuyeuse fonctionnent avec des cadences importantes, typiquement de l'ordre de 200 coups par minute, et il est donc nécessaire d'alimenter le convoyeur de l'étuyeuse avec 200 étuis chaque minute.

Ce chargement mobilise aujourd'hui la présence d'un opérateur dédié à cette opération. Toutes les minutes, l'opérateur doit récupérer sur une palette un carton contenant les étuis stockés à plat, puis le soulève de la palette pour le déposer sur une table de pose. L'opérateur procède à l'ouverture du carton par son ouverture supérieure, en retirant l'adhésif et en libérant, un à un, les quatre volets de fermeture attenant aux quatre parois latérales du carton. L'opérateur soulève à nouveau ce carton, avant de le retourner afin de déverser l'ensemble des étuis sur le convoyeur de l'étuyeuse.

A chaque chargement (environ toute les minutes), l'opérateur doit soulever et retourner un carton recevant les étuis qui pèse de l'ordre d'une dizaine de kilogrammes ce qui conduit bien souvent à des troubles musculosquelettiques.

Il existe depuis longtemps un besoin pour faciliter le chargement des étuyeuses avec des étuis conditionnés dans des cartons, dans leur position à plat parallèlement les uns aux autres, à la verticale, à savoir en appui sur leur chant sur le fond du carton.

### Résumé

La présente divulgation vient répondre à ce besoin.

Il est proposé un procédé robotisé de chargement d'étuis sur une ligne d'emballage à partir d'étuis contenus dans un conteneur parallélépipédique fermé, et dans lequel lesdits étuis comprenant chacun quatre lignes de pliage configurées pour permettre le stockage des étuis dans leur position à plat, et autoriser le dépliage de l'étui autour des quatre lignes de pliage dans une position en volume où l'étui définit un volume tubulaire avec au moins une embouchure autorisant le remplissage de l'étui, l'étui présentant des volets de fermeture configurés pour permettre la fermeture de ladite l'embouchure
et dans lequel les étuis sont reçus dans le conteneur dans leur position à plat, parallèlement les uns contre les autres sous forme d'une rangée d'étuis, s'étendant entre deux faces opposées du conteneur parallélépipédique, dites première face et deuxième face , la rangée d'étui à plat présentant un premier étui de la rangée, à plat, disposé parallèle à la première face du conteneur, en regard de la première face, et un dernier étui de la rangée à plat, parallèle à la deuxième face, en regard de la deuxième face, les étuis s'étendant suivant la direction des lignes de pliage entre une troisième face et une quatrième face du conteneur, opposées, la cinquième face et la sixième face définissant le fond et le couvercle du conteneur
et dans lequel ledit procédé est mis en œuvre par une installation comprenant un bras robotisé manipulant un système de préhension présentant une pince motorisée avec deux mors consistant en un premier mors et un deuxième mors, ainsi qu'un mécanisme d'actionnement configuré pour écarter et rapprocher les deux mors,
procédé dans lequel on procède au chargement de la ligne d'emballage (Lg), après ouverture du conteneur par :
   - /**d**/ insertion du premier mors de la pince entre la première face du conteneur et le premier étui de la rangée d'étuis et, insertion du deuxième mors de la pince entre le dernier étui de la rangée d'étuis et la deuxième face du conteneur, et rapprochement du premier mors et du deuxième mors alors insérés dans le conteneur jusqu'à agripper la rangée d'étuis,
   - /**e**/ pilotage du bras robotisé de sorte à extraire la rangée d'étuis du conteneur saisie par la pince motorisée et à charger la ligne d'emballage avec la rangée d'étuis, après le relâchement de la rangée d'étuis par écartement des deux mors de la pince motorisée.

Les caractéristiques exposées dans les paragraphes suivants peuvent, optionnellement, être mises en œuvre. Elles peuvent être mises en œuvre indépendamment les unes des autres ou en combinaison les unes avec les autres :

Selon un mode de réalisation du procédé, la première face et la deuxième face du conteneur présentant respectivement des portions de hauteur débordantes s'étendant au-dessus de la rangée d'étuis, du côté de l'ouverture du conteneur ouvert, le procédé prévoyant préalablement à /d/ :
- les positionnements des extrémités distales respectivement du premier mors et du second mors en vis-à-vis des portions débordantes de la première face et de la deuxièmes face du conteneur, et,
- la commande du mécanisme d'entrainement pour écarter les deux mors de la pince motorisée et ainsi écarter la première face de la deuxième face du conteneur, en générant, d'une part, un premier inter-espace entre la première face et le premier étui de la rangée étuis, et, d'autre part, un deuxième inter-espace entre le dernier étui et la deuxième face de la rangée et de sorte qu'à /d/ l'insertion du premier mors de la pince motorisée entre la première face du conteneur et le premier étui de la rangée et, l'insertion du deuxième mors de la pince entre le dernier étui de la rangée et la deuxième face du conteneur s'effectuent par la descente du premier mors et du deuxième mors respectivement dans le premier inter-espace et le deuxième inter-espace .

Selon un autre mode de réalisation du procédé, la première face et la deuxième face du conteneur présentant du côté de l'ouverture du conteneur ouvert, respectivement une première encoche et une seconde encoche, débouchantes du côté de l'ouverture, le procédé prévoyant préalablement à /d/ :
les positionnements des extrémités distales respectivement du premier mors et du second mors en vis-à-vis à l'extérieur du conteneur, respectivement en regard de la première encoche et de la seconde encoche
   - la commande du mécanisme pour rapprocher partiellement les deux mors de la pince, au travers des encoches de sorte à resserrer le premier étui et le dernier étui de la rangée, sans agripper la rangée d'étuis, en créant d'une part, un premier inter-espace entre la première face et le premier étui de la rangée, et, d'autre part, un deuxième inter-espace entre le dernier étui et la deuxième face du conteneur
et de sorte qu'à /d/ l'insertion du premier mors de la pince motorisée entre la première face du conteneur et le premier étui de la rangée et, l'insertion du deuxième mors de la pince entre le dernier étui de la rangée et la deuxième face du conteneur s'effectuent par la descente du premier mors et du deuxième mors respectivement dans le premier inter-espace et le deuxième inter-espace.

Selon encore un autre mode de réalisation du procédé, les étuis de la rangée d'étuis, y compris le premier étui et le dernier étui de la rangée, présentant une portion débordante, du côté de l'ouverture, les étuis s'étendant en hauteur delà du bord supérieur de la première face et du bord supérieur de la deuxième face du conteneur alors ouvert, le procédé prévoyant préalablement à /d/ :
- les positionnements des extrémités distales respectivement du premier mors et du second mors en vis-à-vis des portions débordantes du premier étui et du dernier étui de la rangée
- la commande du mécanisme d'actionnement pour rapprocher les deux mors de la pince de sorte à rapprocher partiellement les deux mors de la pince de sorte à resserrer le premier étui et le dernier étui de la rangée d'étuis, sans agripper la rangée d'étui, en créant d'une part, un premier inter-espace entre la première face et le premier étui de la rangée, et, d'autre part, un deuxième inter-espace entre le dernier étui et la deuxième face du conteneur
et de sorte qu'à /d/ l'insertion du premier mors de la pince entre la première face du conteneur et le premier étui de la rangée et, l'insertion du deuxième mors de la pince entre le dernier étui de la rangée et la deuxième face du conteneur s'effectuent par la descente du premier mors et du deuxième mors respectivement dans le premier inter-espace et le deuxième inter-espace.

Le procédé robotisé de chargement d'étuis peut prévoir, préalablement à /d/ et /e/ l'ouverture du conteneur lorsque le conteneur repose sur une surface par l'intermédiaire de la cinquième face du conteneur par :
- /c/ le pilotage du bras robotisé de sorte à ouvrir ou retirer la sixième face du conteneur formant couvercle.

Selon un mode de réalisation, le système de préhension manipulé par le bras robotisé comprend un organe de coupe, et dans lequel à /c/ le bras robotisé manipulant l'organe de coupe est piloté de sorte que l'organe de coupe effectue une coupe périphérique continue le long des première, deuxième, troisième et quatrième faces du conteneur, et de sorte à permettre le retrait de la sixième face formant couvercle. Selon un mode de réalisation du procédé robotisé de chargement d'étuis, successivement à /c/ on pilote le bras robotisé de sorte à saisir le couvercle détaché par la coupe périphérique, puis à évacuer ledit couvercle.

Selon un mode de réalisation du procédé robotisé de chargement d'étuis ladite installation comprend une table de positionnement, comprenant un plan de pose s'étendant suivant des directions X et Y, ladite table de positionnement comprenant des butés coopérant avec au moins deux faces perpendiculaires du conteneur assurant le calage du conteneur et dans lequel les insertions des mors de la pince selon /d/, et/ou l'ouverture du conteneur selon /c/ sont effectués après calage du conteneur par les butées suivant les directions X et Y.

Selon un mode de réalisation du procédé, ladite installation automatisée comprend au moins une zone de stockage des conteneurs empilés les uns sur les autres sur une palette, et dans lequel on procède au chargement de la table de positionnement par :
- /b/ la saisie d'un conteneur empilé sur la palette par le bras robotisé puis le pilotage du bras robotisé pour procéder à la dépose du conteneur sur la table de positionnement.

Selon un mode de réalisation du procédé robotisé de chargement d'étuis lesdits conteneurs comprenant un marquage visuel indicatif de l'orientation du conteneur suivant plan horizontal XY, et dans le système de préhension est équipé d'une caméra, et dans lequel préalablement à /b/, on procède à la reconnaissance du conteneur par :
- /a/ le pilotage du bras robotisé manipulant le système de préhension de sorte à cibler dans le champs de vision de la caméra le marquage visuel d'un conteneur empilé en haut de la pile, et dans lequel ladite installation présentant :
- un module de reconnaissance configuré pour reconnaître le marquage visuel de l'image ciblée par la caméra et pour déterminer l'angle du marquage du conteneur dans le référentiel de la table de positionnement et,
- un module de calcul configuré pour générer, à partir de l'angle du marquage déterminé par le module de reconnaissance, des instructions de guidage pour assurer en /b/, la saisie du conteneur ciblé dans le champs de la caméra et la dépose du conteneur sur la table de positionnement selon une orientation déterminée du marquage visuel dans le référentiel de la table de positionnement.

Selon un mode de réalisation du procédé robotisé de chargement d'étuis on procède au retournement à 180° du conteneur entre la saisie du conteneur en /b/, d'une part, pour laquelle on assure la saisie d'un conteneur empilé sur la palette par le bras robotisé puis le pilotage du robot pour procéder à la dépose du conteneur sur la table de pose, et d'autre part, le calage du conteneur suivant les directions X et Y sur les butées de la table de positionnement.

Par exemple le retournement à 180° du conteneur est assuré pour partie, en /b/ par le bras robotisé lors de la dépose du conteneur, et pour l'autre partie par un basculeur commandé par un actionneur équipant la table de positionnement.

Selon un mode de réalisation, le système de préhension comprend un préhenseur à ventouse configuré pour assurer la saisie du conteneur lors de /b/, et/ou encore configuré pour la saisie du couvercle et son évacuation, le cas échéant.

Selon un mode de réalisation, le préhenseur à ventouse est un préhenseur bi-zones, à deux zones de saisie indépendantes et dans lequel le conteneur recevant la rangée d'étuis, ainsi qu'une feuille de protection disposée intérieur au conteneur, en intercalaire entre le couvercle et les étuis, et dans lequel la saisie du couvercle détaché par la coupe périphérique est assurée par l'une des deux zones du préhenseur à ventouse, et on saisit la feuille de protection, par l'autre des deux zones du préhenseur à ventouse, avant d'évacuer conjointement le couvercle et la feuille de protection par le bras robotisé saisis par les deux zones du préhenseur à ventouses.

Selon un mode de réalisation, ladite installation comprend deux zones de stockage des conteneurs consistant en une première zone de stockage et une deuxième zone de stockage chacune recevant des conteneurs empilés sur une palette, chacune des zones de stockage, accessible par le bras robotisé (1) pour la mise en œuvre de /b/,
et dans lequel les deux zones de stockage sont séparées par une barrière physique ou une barrière de surveillance virtuelle, les deux zones de stockage présentant respectivement deux entrées indépendantes pour un opérateur, et dans lequel ladite installation comprend des moyens de détection d'une intrusion de l'opérateur, configuré pour détecter en les distinguant, une intrusion dans la première zone de stockage et dans la deuxième zone de stockage et dans lequel le module de pilotage et de commande du bras robotisé est configuré pour travailler en temps masqué dans l'une des deux zones de stockage, éventuellement à vitesse réduite, lorsqu'une intrusion est détectée dans l'autre zone de stockage.

La présente divulgation concerne encore l'utilisation du procédé de chargement d'étuis sur une ligne d'emballage fonctionnant en continu, ladite ligne d'emballage comprenant des moyens assurant :
- la mise en volume des étuis par dépliage de l'étui autour des lignes de pliage,
- le chargement des étuis avec des produits alimentaires via les embouchures des étuis,
- et la fermeture des étuis par repliage et collage des volets de fermeture.

### Brève description des dessins

D'autres caractéristiques, détails et avantages apparaîtront à la lecture de la description détaillée ci-après, et à l'analyse des dessins annexés, sur lesquels :
**Fig. 1**

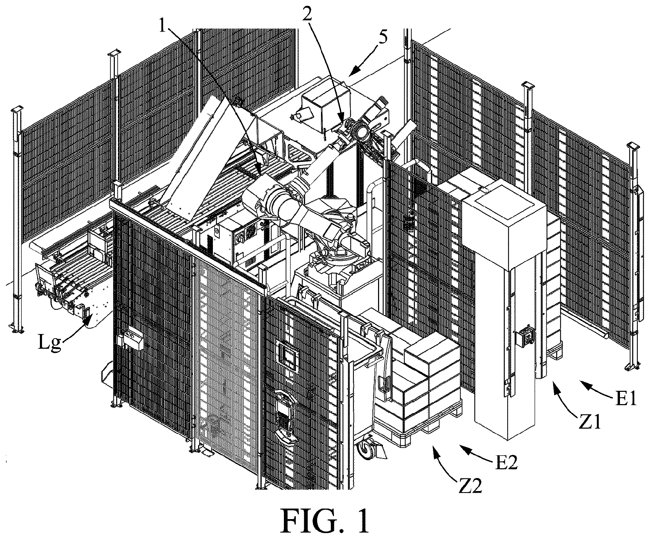

   [Fig. 1] est une vue en perspective illustrant l'installation robotisée objet du procédé selon la présente divulgation, ladite installation comprenant, dans une zone sécurisée et cloisonnée, un bras robotisé manipulant un système de préhension, une table de positionnement, deux zones de stockage, chacune recevant une palette de conteneurs avec étuis, le bras robotisé étant configuré pour saisir un conteneur dans l'une ou l'autre des deux zones des stockage, le déposer sur la table de positionnement, ouvrir le conteneur, puis saisir l'ensemble des étuis formant une rangée d'étuis à l'intérieur du conteneur ouvert, avant d'extraire les étuis et de les déposer sur un convoyeur d'une ligne d'emballage, reçu dans la zone sécurisée.
**Fig. 2**

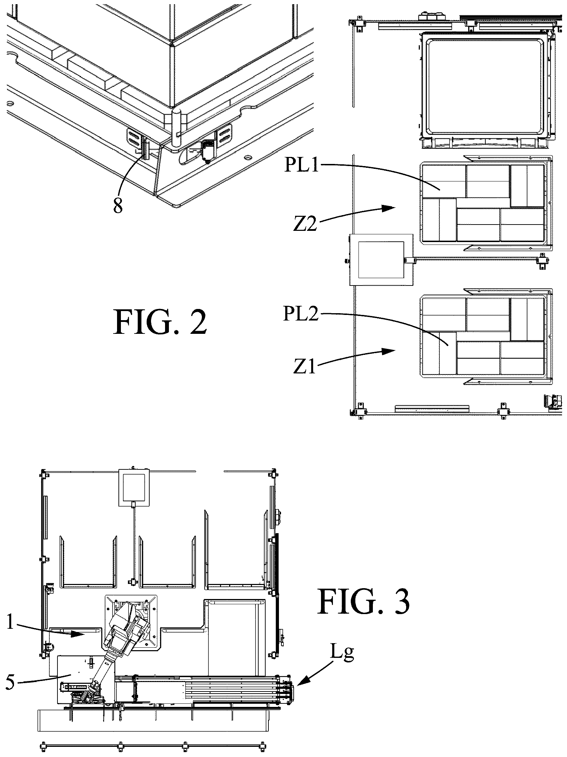

   [Fig. 2] illustre à droite, une vue de dessus de deux châssis de positionnement, en U, ancrés au sol, configurés respectivement pour assurer les positionnements de deux palettes dans les deux zones de stockage, et à gauche un système de détection vérifiant le bon positionnement de la palette dans le châssis en U, par détection d'un coin de la palette au niveau d'un angle du châssis.
**Fig. 3**
   [Fig. 3] est une vue de l'installation en début de cycle, le robot en position d'attente, laissant libre la première zone de stockage et la deuxième zone de stockage alors vides pour permettre à un opérateur d'entrer et de charger les zones de stockage avec une palette.
**Fig. 4**

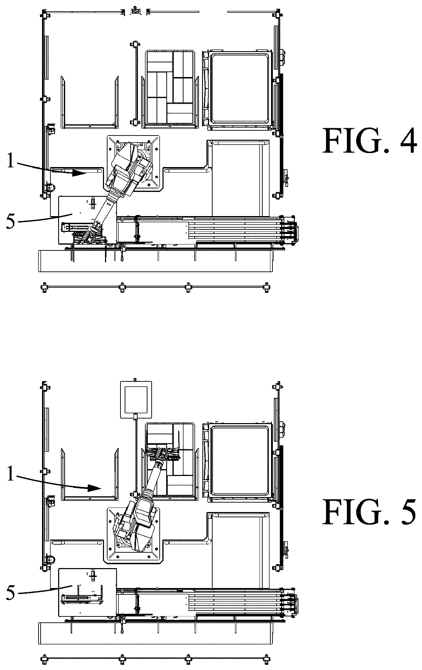

   [Fig. 4] est une vue consécutive à la figure 3, après chargement de la zone de stockage (à droite) avec une palette de conteneurs, la palette positionnée dans le châssis ancré au sol.
**Fig. 5**
   [Fig. 5] est une vue consécutive à la figure 4 illustrant le déplacement du bras robotisé venant balayer le dessus de la palette dans la zone de stockage pour vérifier la présence des conteneurs sur la palette.
**Fig. 6**

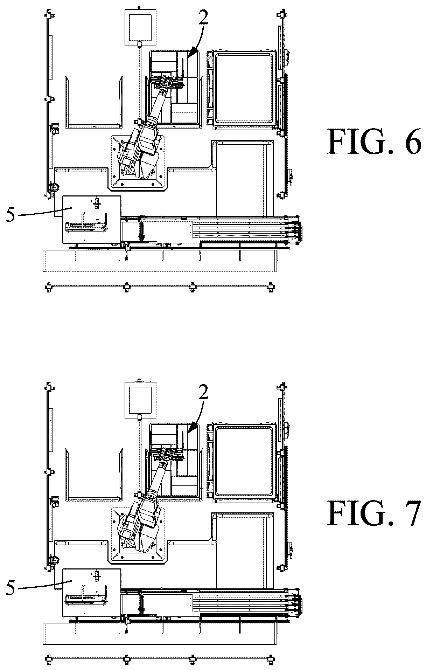

   [Fig. 6] est une vue consécutive de la figure 5, pour lequel le bras robotisé positionne dans le champ de vision de la caméra un conteneur pourvu d'un marquage visuel, et en vue de déterminer le sens de la palette.
**Fig. 7**
   [Fig. 7] est une vue consécutive de la figure 6 pour laquelle, le bras robotisé saisit un premier conteneur par un préhenseur à ventouse.
**Fig. 8**

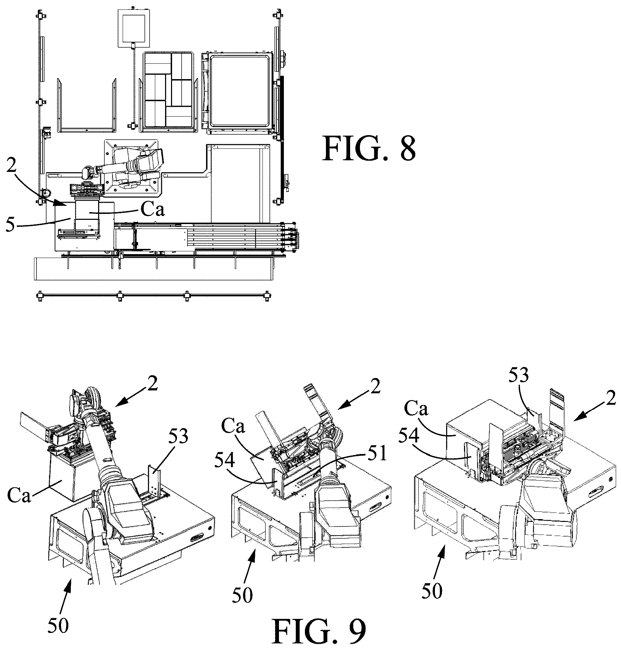

   [Fig. 8] est une vue consécutive de la figure 6 pour laquelle le bras robotisé dépose le conteneur sur la table de positionnement, en procédant à un retournement du conteneur de 90°.
**Fig. 9**
   [Fig. 9] montre en trois vues la décomposition du retournement de 90° du conteneur par le bras robotisé.
**Fig. 10**

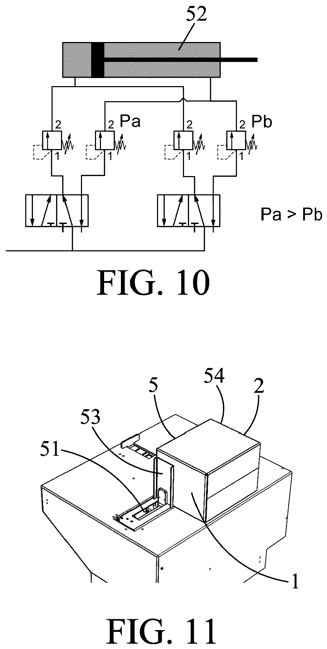

   [Fig. 10] montre un schéma fluidique du vérin commandant un mors mobile d'un couple mors fixe/ mors mobile emporté par un basculeur de la table de positionnement, le circuit fluidique permettant de manière notable le serrage de la pince selon deux pressions Pa et Pb distinctes.
**Fig. 11**
   [Fig. 11] est une vue consécutive de la figure 9 montrant le conteneur retourné à 90° par le bras robotisé, après la saisie du conteneur par rapprochement des deux mors du basculeur, le piston du vérin soumis à une pression Pa (« forte) ».
**Fig. 12**

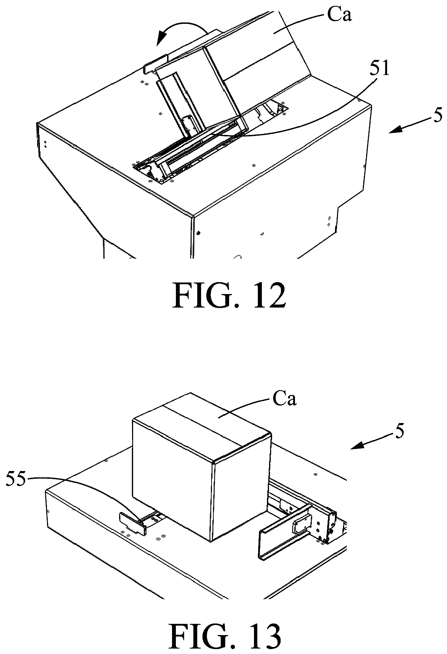

   [Fig. 12] est une vue consécutive de la figure 11 montrant le conteneur saisi par le mors du basculeur, retourné à 90° par le basculeur sous l'action d'un vérin de retournement.
**Fig. 13**
   [Fig. 13] est une vue consécutive de la figure 12, les mors du basculeur commandés à s'écarter, par la commande du mors mobile.
**Fig. 14**

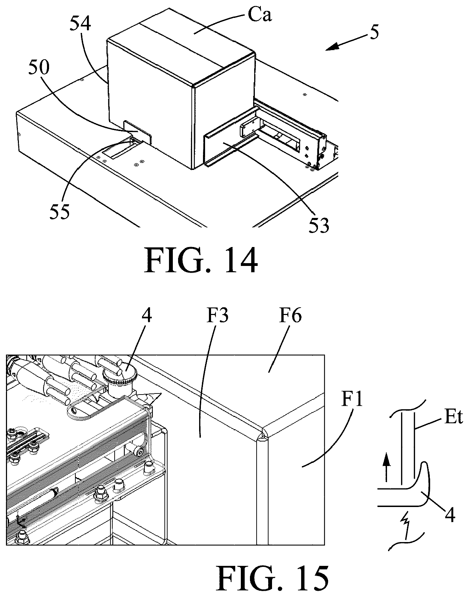

   [Fig. 14] est une vue consécutive de la figure 13 après recalage, par une butée mobile contraignant le conteneur en butée contre le châssis du basculeur, puis la fermeture des mors du basculeurs lorsque le mors mobile est commandé à la fermeture, le piston du vérin commandant le mors mobile soumis à une pression Pb (faible), à savoir inférieure à la pression Pa.
**Fig. 15**
   [Fig. 15] est une vue consécutive de la figure 14 après recalage du conteneur, le bras robotisé manipulant un outil de coupe, en l'espèce une lame crochet de sorte à effectuer une trajectoire de coupe continue, périphérique, assurant le détachement du couvercle.
**Fig. 16**

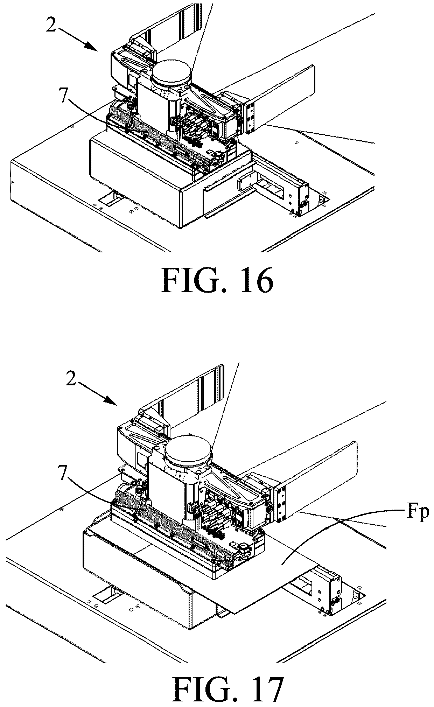

   [Fig. 16] est une vue consécutive de la figure 15 après saisi du couvercle par le préhenseur à ventouse du bras robotisé, le couvercle détaché de la base du conteneur.
**Fig. 17**
   [Fig. 17] est une vue consécutive de la figure 16, le préhenseur à ventouse du bras robotisé assurant la saisie d'une feuille de protection, intercalaire entre le couvercle du conteneur et la rangée d'étuis.
**Fig. 18**

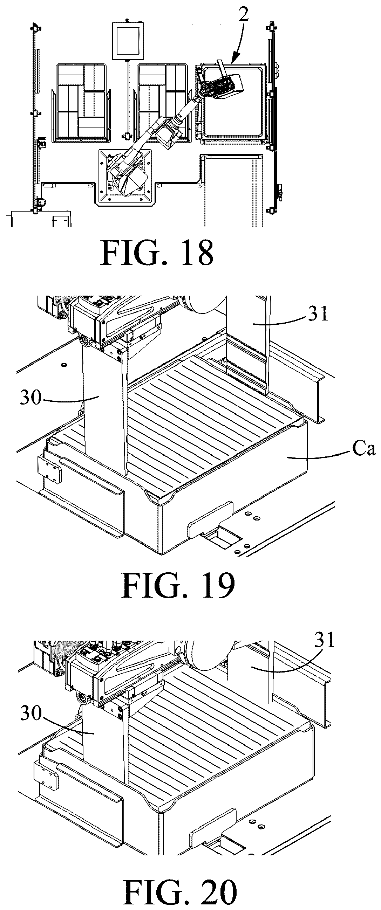

   [Fig. 18] est une vue consécutive de la figure 17, le préhenseur à ventouse du bras robotisé assurant la dépose de l'intercalaire et/ou du couvercle dans une poubelle.
**Fig. 19**
   [Fig. 19] est une vue consécutive de la figure 18, pour laquelle le bras robotisé positionne les extrémités distales des premier et deuxième mors de la pince motorisée du système de préhension, en vis-à-vis de portions débordantes de la première face et de la deuxième face, avec écartement des deux mors de sorte à écarter les faces et à faire bailler le conteneur en créant un premier inter-espace entre la première face du conteneur et le premier étui de la rangée, et un deuxième inter-espace entre la deuxième face du conteneur et le dernier étuis de la rangée.
**Fig. 20**
   [Fig. 20] est une vue consécutive de la figure 19, pour laquelle le bras robotisé commande les mors à la descente dans les deux inter-espaces créés, éventuellement en procédant de préférence au rapprochement des mors, au cours de la descente des mors et jusqu'à obtenir l'agrippage des étuis de la rangée.
**Fig. 21**

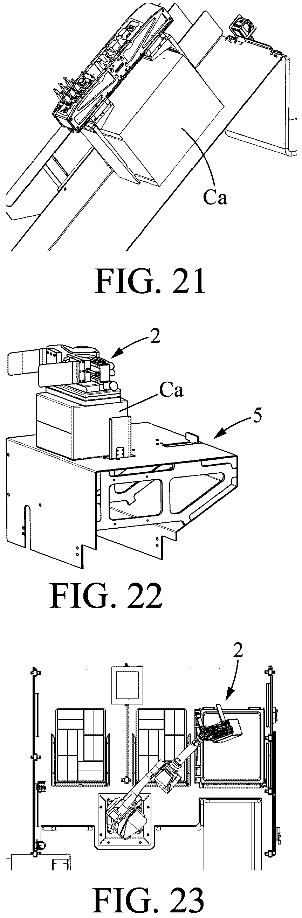

   [Fig. 21] est une vue consécutive de la figure 20, pour laquelle le bras robotisé extrait les étuis du conteneur calé sur la table de positionnement, et les dépose sur une rampe inclinée du convoyeur de la ligne d'emballage.
**Fig. 22**
   [Fig. 22] est une vue consécutive de la figure 21, pour laquelle le bras robotisé saisit le conteneur vide par le préhenseur à ventouse, celui-ci ayant été récemment retourné de 90° par le basculeur, en sens inverse de la bascule par rapport à la dépose du conteneur (voir figure 12).
**Fig. 23**
   [Fig. 23] est une vue consécutive de la figure 22, pour laquelle le bras robotisé ayant saisi le conteneur vide ; l'évacue et le dépose dans une poubelle, illustrant la fin du cycle.
**Fig. 24**

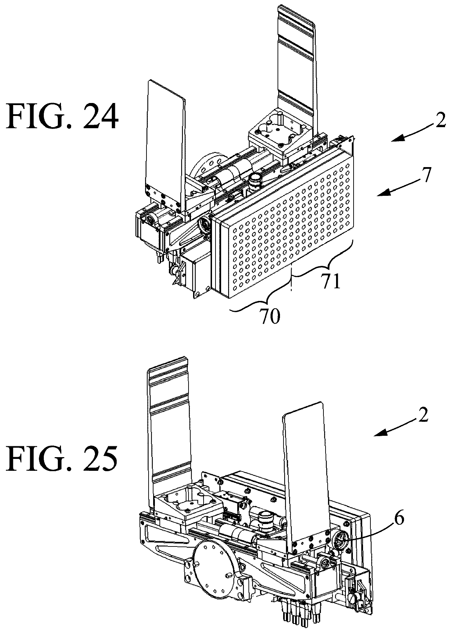

   [Fig. 24] est une vue de détail du système de préhension, orienté de sorte à illustrer le préhenseur à ventouse bi-zone.
**Fig. 25**
   [Fig. 25] est une vue du système de préhension, selon la figure 24, orienté de sorte à illustrer la caméra.
**Fig. 26**

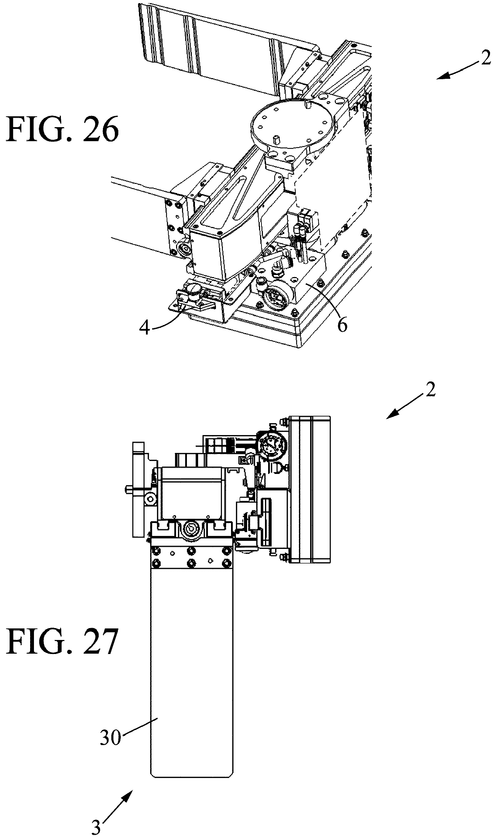

   [Fig. 26] est une vue du système de préhension, selon la figure 24, orienté de sorte à illustrer l'outil de coupe, sous forme d'une lame en crochet.
**Fig. 27**
   [Fig. 27] est une vue du système de préhension, selon la figure 24, orienté de sorte à illustrer la pince motorisée.
**Fig. 28**

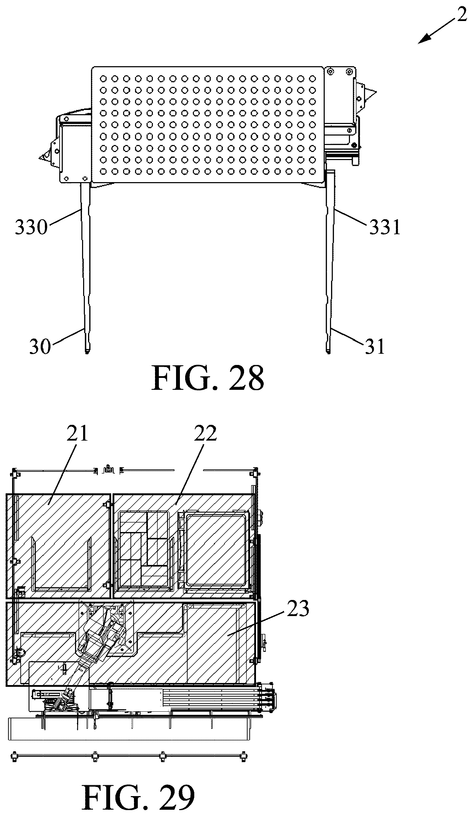

   [Fig. 28] est une vue du système de préhension, selon la figure 27, orienté de sorte à illustrer la pince motorisée dont les deux mors premier mors et second mors pointent vers le bas.
**Fig. 29**
   [Fig. 29] est une vue de dessus de l'installation, illustrant trois zones sécurisées faisant l'objet de surveillances indépendantes ; à savoir une zone de surveillance à l'intérieur de laquelle est ancré le bras robotisé, une première zone de stockage d'une première palette recevant des conteneurs avec étuis, et une troisième zone de stockage recevant une deuxième palette recevant des conteneurs avec étuis.
**Fig. 30**

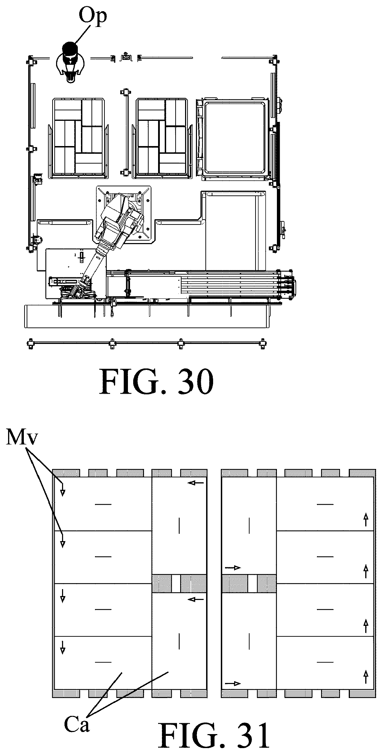

   [Fig. 30] est une vue de dessus de l'installation, telle qu'illustrée à la figure 29, lorsqu' un opérateur entre dans la zone surveillée associée à la première zone de stockage, un module de surveillance interdisant au bras robotisé de venir travailler dans la première zone de stockage, le module de surveillance autorisant le bras à travailler dans la deuxième zone de stockage, tant qu'aucune intrusion n'est détectée dans cette zone.
**Fig. 31**
   [Fig. 31] est une vue de dessus des conteneurs positionnés sur une palette, à gauche, dans un premier sens possible de la palette, à droite dans l'autre sens possible de la palette, le sens de la palette étant indentifiable par les marquages visuels des conteneurs.
**Fig. 32**

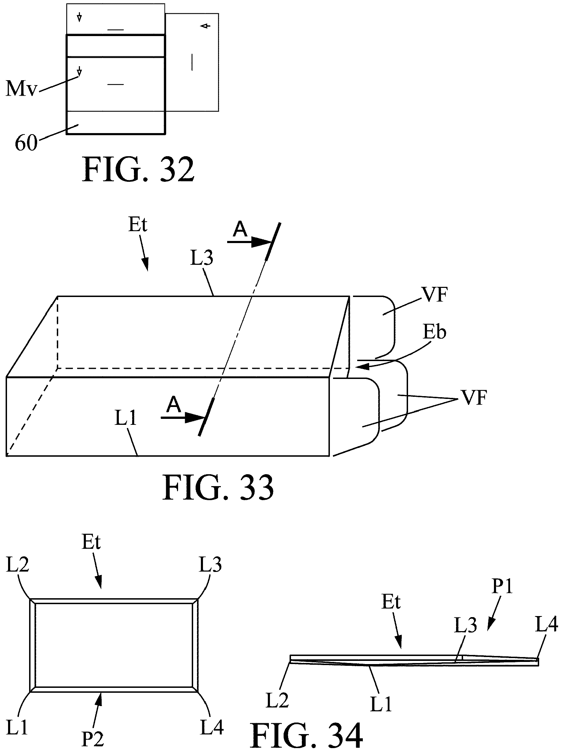

   [Fig. 32] est une vue de dessus des conteneurs positionnés sur une palette, avec schématisation du champ de vision sur de la caméra ciblant un conteneur de la palette, y compris son marquage visuel sous forme d'une flèche.
**Fig. 33**
   [Fig. 33] est une vue d'un étui dans sa position en volume, une embouchure de l'étui étant laissée ouverte par des volets de fermeture de l'étui.
**Fig. 34**
   [Fig. 34] est une vue de l'étui selon la coupe A-A de la figure 33 dans sa position en volume, et à droite dans sa position à plat, après pliage autour de quatre lignes de pliage de l'étui.
**Fig. 35**

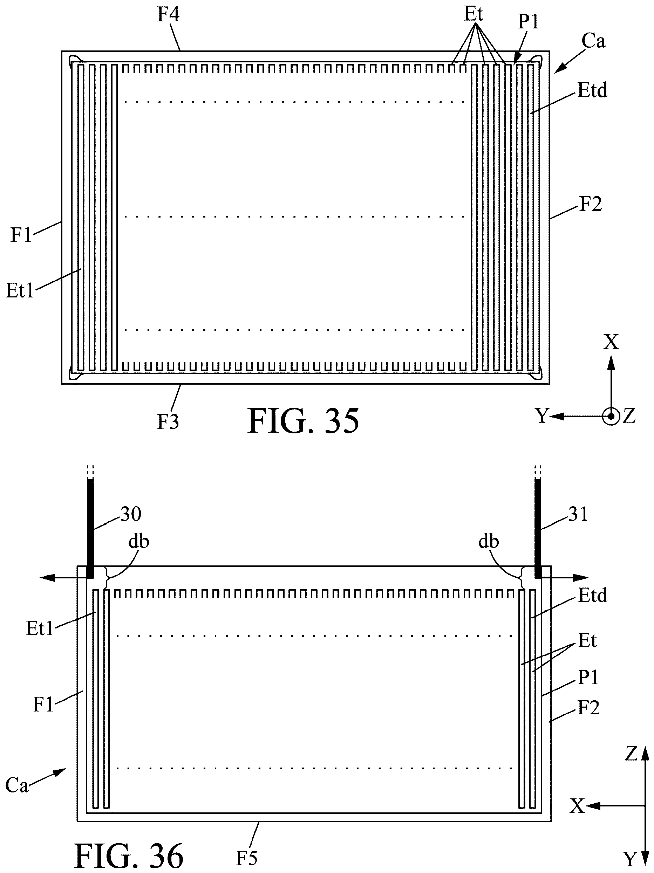

   [Fig. 35] est une vue du conteneur ouvert, vue de dessus, illustrant la rangée d'étuis dans leur position à plat, la rangée s'étendant depuis le premier étui de la rangée, en vis-à-vis de la première face du conteneur, jusqu'au dernier étui, à plat, en vis-à-vis de la deuxième face du conteneur.
**Fig. 36**
   [Fig. 36] est une vue du conteneur ouvert, de la figure 35 selon un plan de coupe vertical, illustrant les deux mors de la pince motorisée en appui respectivement contre l'intérieur de la première face et de la deuxième face, sur des portions débordantes des faces, en vue de créer des inter-espaces lorsque les mors s'écartent, et selon un premier mode de réalisation du procédé lors de l'insertion des mors.
**Fig. 37**

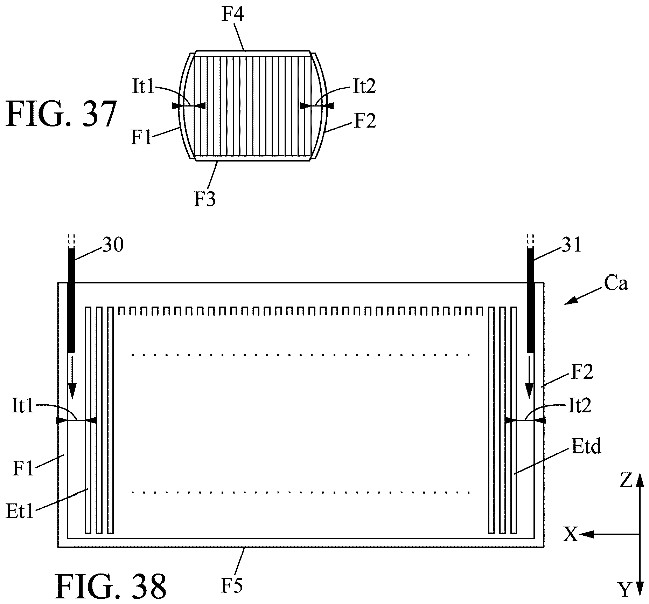

   [Fig. 37] est une vue de dessus, après écartement des mors de la figure 36, afin de faire bailler le conteneur en créant un premier inter-espace entre la première face du conteneur et le premier étui de la rangée, et un deuxième inter-espace entre la deuxième face du conteneur et le dernier étui de la rangée.
**Fig. 38**
   [Fig. 38] est une vue du conteneur selon la coupe de la figure 36, illustrant la descente du premier mors et du second mors, respectivement dans le premier et second inter-espace, selon le premier mode de réalisation.
**Fig. 39**

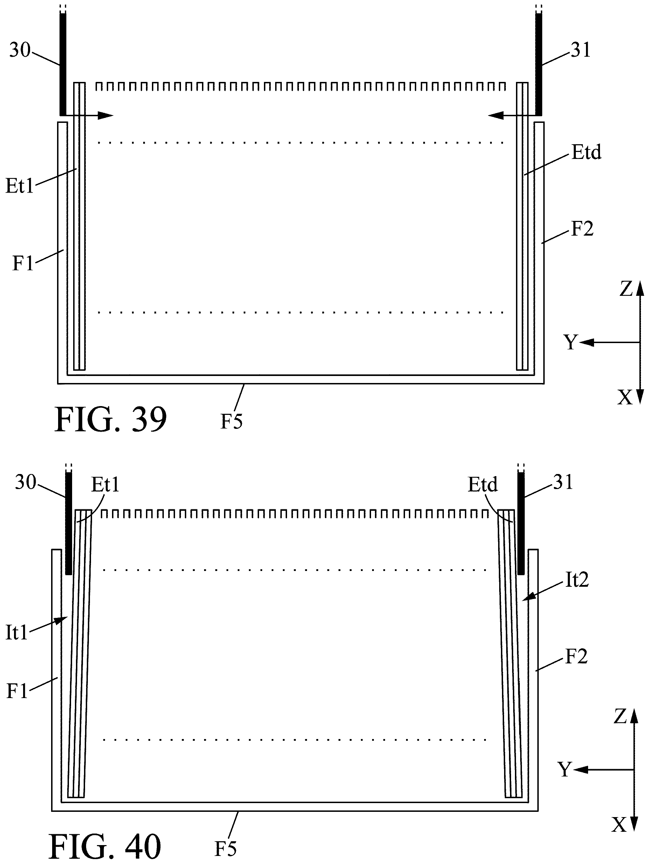

   [Fig. 39] est une vue du conteneur ouvert, de la figure 35 selon un plan de coupe vertical, illustrant les deux mors de la pince motorisée en appui respectivement sur des portions débordantes du premier étui et du dernier étui et selon un deuxième mode de réalisation du procédé lors de l'insertion des mors, et en vue de créer un premier inter-espace entre la première face du conteneur et le premier étui, et un second inter-espace entre la deuxième face du conteneur et le dernier étui lors d'un rapprochement partiel des mors.
**Fig. 40**
   [Fig. 40] est une vue du conteneur ouvert, de la figure 39 après création des deux inter-espace, illustrant la descente des mors premier et second mors dans les deux inter-espaces premier et second inter-espaces.
**Fig. 41**

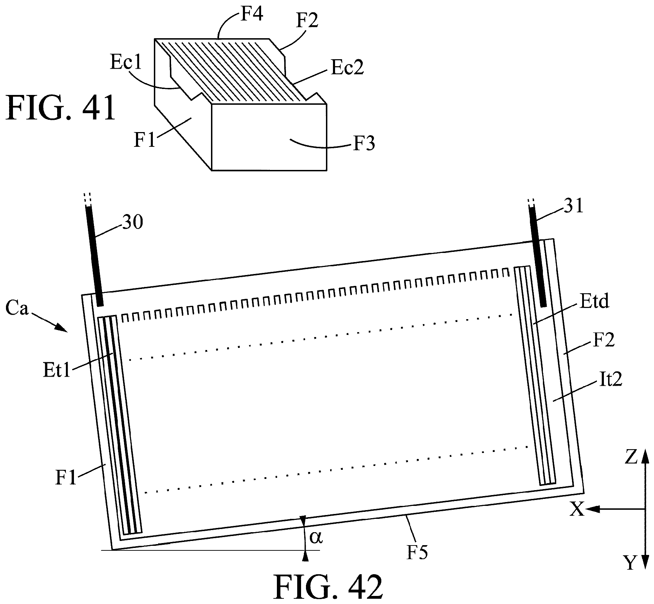

   [Fig. 41] est une vue du conteneur ouvert, en perspective pourvu d'une première encoche et d'une seconde encoche, autorisant le passage traversant des extrémités des mors pour la mise en œuvre de l'étape de rapprochement des mors illustrée à la figure 39.
**Fig. 42**
   [Fig. 42] est une vue du conteneur ouvert, de la figure 35 selon un plan de coupe vertical, selon un plan vertical, illustrant le basculement du conteneur dans un premier sens afin de créer, par la gravité, un inter-espace entre le dernier étui et la deuxième face du conteneur, permettant l'insertion du second mors, alors que le premier mors n'est pas inséré.
**Fig. 43**

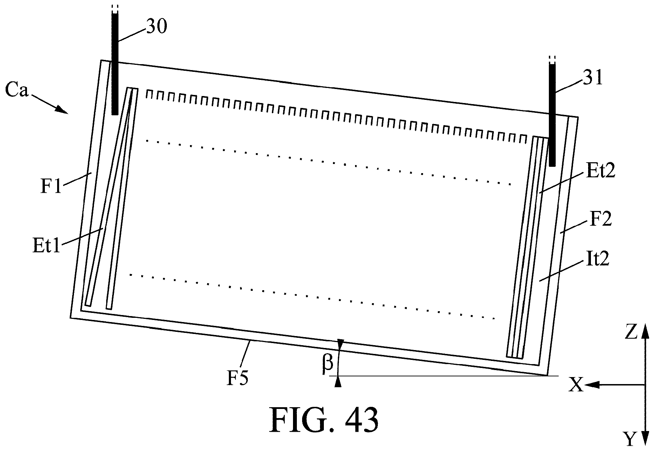

   [Fig. 43] est une vue du conteneur ouvert, de la figure 35 selon un plan de coupe vertical, après basculement du conteneur dans un second sens, afin de créer, par la gravité, un inter-espace entre le premier étui et la première face du conteneur, permettant l'insertion du premier mors, alors que le deuxième mors est déjà inséré dans l'inter-espace entre le dernier étui et la deuxième face.

### Description des modes de réalisation

La présente divulgation est relative à un procédé robotisé de chargement d'étuis Et sur une ligne d'emballage Lg à partir d'étuis contenus dans un conteneur parallélépipédique fermé.

Lesdits étuis Et comprennent chacun des lignes de pliage L1, L2, L3, L4, typiquement au nombre de quatre, configurées pour permettre le stockage des étuis dans leur position à plat P1, comme illustré à droite de la figure 34, et autoriser le dépliage de l'étui autour des quatre lignes de pliage L1, L2, L3, L4 dans une position en volume P2 comme illustré à gauche à la figure 34.

Dans sa position en volume P2, l'étui définit un volume tubulaire avec au moins une embouchure Eb autorisant le remplissage de l'étui, et comme visible à titre indicatif à la figure 33. L'étui présente des volets de fermeture Vf configurés pour permettre la fermeture de ladite l'embouchure Eb.

Ainsi le procédé de chargement d'étuis trouve une application particulière sur une ligne d'emballage fonctionnant en continu, ladite ligne d'emballage Lg comprenant des moyens assurant :
- la mise en volume des étuis par dépliage de l'étui autour des lignes de pliage L1, L2, L3, L4,
- le chargement des étuis avec des produits alimentaires via les embouchures Eb des étuis,
- et la fermeture des étuis par repliage et collage des volets de fermeture Vf.

Les produits alimentaires peuvent être typiquement des biscuits, gâteaux ou autre, typiquement reçus dans un emballage primaire plastique, l'étui constituant alors un emballage secondaire.

Le conteneur parallélépipédique Ca est typiquement en carton ondulé.

Les étuis Et sont reçus et stockés dans le conteneur Ca dans leur position à plat P1, parallèlement les uns contre les autres sous forme d'une rangée d'étuis, s'étendant entre deux faces opposées du conteneur parallélépipédique, dites première face F1 et deuxième face F2, la rangée d'étui à plat présentant un premier étui Et de la rangée, à plat, disposé parallèle à la première face F1 du conteneur, en regard de la première face F1 notamment en contact, et un dernier étui Etd de la rangée à plat, parallèle à la deuxième face F2, en regard de la deuxième face notamment en contact, et comme visibles aux figures 35 ey 36 notamment.

Comme visible à la figure 35, les étuis s'étendant suivant la direction des lignes de pliage L1 à L4 entre une troisième face F3 et une quatrième face F4 du conteneur, opposées. La cinquième face F5 et la sixième face F6, opposées ; définissent le fond et le couvercle du conteneur parallélépipédique.

Le procédé selon la présente divulgation est mis en œuvre par une installation robotisée, illustrée selon un mode de réalisation aux figures.

Cette installation comprend un bras robotisé 1, par exemple un bras robotisé six axes, manipulant un système de préhension 2.

Ce système de préhension comprend une pince motorisée 3 avec deux mors consistant en un premier mors 30 et une deuxième mors 31, ainsi qu'un mécanisme d'actionnement configuré pour écarter et rapprocher les deux mors 30 et 31. Une telle pince motorisée est illustrée en vue de détails aux figures 27 et 28.

Ainsi et aux figures 27 et 28, les deux mors de la pince, premier mors 30 et deuxième mors 31 comprenant des éléments plans qui s'étendent globalement dans deux plans parallèles selon les directions X et Z aux figures.

Le premier mors 30 s'étend notamment selon la direction Z, depuis une extrémité proximale solidaire d'un premier chariot du mécanisme d'actionnement, jusqu'à une extrémité distale du premier mors 30, et le deuxième mors s'étend, depuis une extrémité proximale solidaire d'un deuxième chariot, jusqu'une extrémité distale du deuxième mors 31.

Le premier chariot embarquant le premier mors 30 et le deuxième chariot embarquant le deuxième mors 31, sont déplaçables selon la direction X, à la figure 28, et entrainés par un actionneur tel qu'un vérin électrique. Le rapprochement des mors 30,31 permet le serrage et la fermeture de la pince motorisée, et l'écartement des mors 30, 31 permet au contraire de desserrer et relâcher un objet.

La dimension des mors premier mors 30 et deuxième mors 31 suivant la direction Y, est inférieure à la dimension du conteneur séparant la troisième face F3 et la quatrième F4 et les mors sont minces suivant la direction X, de sorte à faciliter les insertions des mors dans le conteneur, entre respectivement la première face F1 et le premier étui Et1, et entre le dernier étui Etd et la deuxième face F2.

On remarque que les mors peuvent être constitués par des lames métalliques, présentant un effet ressort lors du serrage. Les deux lames peuvent présenter un pliage 330, 331, à proximité des extrémités proximales des mors.

Selon la présente divulgation on procède au chargement de la ligne d'emballage Lg, après ouverture du conteneur Ca par :
- /**d**/ insertion du premier mors 30 de la pince entre la première face F1 du conteneur et le premier étui Et1 de la rangée d'étuis et, insertion du deuxième mors 31 de la pince entre le dernier étui Etd de la rangée d'étuis et la deuxième face F2 du conteneur, et rapprochement du premier mors 30 et du deuxième mors 31 alors insérés dans le conteneur jusqu'à agripper la rangée d'étuis,
- /**e**/ pilotage du bras robotisé de sorte à extraire la rangée d'étuis du conteneur saisie par la pince motorisée 3 et à charger la ligne d'emballage Lg avec la rangée d'étuis, après le relâchement de la rangée d'étuis par écartement des deux mors 30,31 de la pince motorisée.

Le procédé selon la présente divulgation permet ainsi de saisir de manière robotisée l'ensemble des étuis de la rangée d'étuis Et reçus dans le conteneur Ca, d'extraire les étuis du conteneur ouvert par le système de préhension 2, et de déplacer les étuis jusqu'à la ligne d'emballage Lg où les étuis sont relâchés par écartement des deux mors 30, 31 du système de préhension.

Les figures 19 et 20 illustrent à titre d'exemple, une possibilité d'insertion des mors dans le conteneur ; la figure 20 illustrant la position où les mors, alors plongés dans le conteneur assurent l'agrippage de la rangée des étuis lorsque rapprochés. Dans cette position, une attention particulière est portée pour que, d'une part, le premier mors appui sur le premier étui, et d'autre part, le deuxième mors appuie sur le dernier étui, en dehors des lignes de pliage L1, L2, L3, et L4 de l'étui à plat. On évite ainsi de « casser » une ligne de pliage de l'étui qui ne pourrait plus s'ouvrir sur la ligne d'emballage et serait à l'origine de blocage de ligne.

A cet effet, chaque mors peut présenter des cales (non illustrées) réglables en hauteur suivant la direction Z des corps mors à la figure 27 destinés à entrer en contact avec les étuis, et de manière à garantir que le pince ne vienne pas appuyer sur une des lignes de pliage (L1 à L4) d'un étui. Ces cales sont réglées en hauteur de sorte à venir appuyer sur l'étui (premier étui ou dernier étui) sur une zone dépourvue de ligne pliage.

De manière générale, le procédé peut prévoir de créer activement et positivement, d'une part, un premier inter-espace It1 entre la première face F1 du conteneur Ca et le premier étui Et1 de la rangée d'étui, et d'autre part, un second inter-espace It2 entre la deuxième face F2 du conteneur Ca et le dernier étui Etd de la rangée d'étuis, préalablement à l'insertion des deux mors premier mors 30 et deuxième mors 31, dans les inter-espaces It1, et It2.

Plusieurs possibilités peuvent être prévues pour la création de ces inter-espaces It1, It2, assurant d'une part l'insertion du premier mors 20 entre la première face F1 du conteneur et le premier étui Et1, et l'insertion du deuxième mors entre la deuxième face du conteneur F2.

Une première possibilité de création de ces deux inter-espaces It1 et It2 consiste à faire bailler le conteneur Ca et est illustrée aux figures 19 et 20, et plus en détails aux figures 36 à 38, et nécessite que la première face F1 et la deuxième face F2 du conteneur CA présentent respectivement des portions de hauteur débordantes db s'étendant au-dessus de la rangée d'étuis, du côté de l'ouverture du conteneur ouvert.

Ainsi, et, à la figure 36, on remarque que la première face F1, s'étend suivant la direction Z, au-delà de l'extrémité supérieure des étuis à plat, et en particulier du premier étui Et1. De même la deuxième face F2 du conteneur, s'étend suivant la direction Z, au-delà de l'extrémité supérieure des étuis à plat, et en particulier du dernier étui Etd.

Le procédé prévoit alors préalablement à /**d**/ :
- les positionnements des extrémités distales respectivement du premier mors 30 et du second mors 31 en vis-à-vis des portions débordantes db de la première face F1 et de la deuxième face F2 du conteneur, (voir figure 19 ou encore figure 36), et,
- la commande du mécanisme d'entrainement pour écarter les deux mors 30,31 de la pince motorisée et ainsi écarter la première face F1 de la deuxième face F2 du conteneur, en générant, d'une part, un premier inter-espace It1 entre la première face F1 et le premier étui Et1 de la rangée étuis, et, d'autre part, un deuxième inter-espace It2 entre le dernier étuis Et2 et la deuxième face F2 de la rangée Etui.

Comme visible à la figure 37, l'écartement des mors 30,31 vient déformer la première face F1 et la deuxième face F2 du conteneur, vers l'extérieur en s'arquant. La concavité de la première face F1 (coté intérieur au conteneur) forme le premier inter-espace It1 permettant alors l'insertion et la descente du premier mors 30, et la concavité de la deuxième face F2 (coté intérieur au conteneur) forme le deuxième inter-espace permettant alors l'insertion du deuxième mors 31.

Ainsi et à /**d**/ l'insertion du premier mors 30 de la pince motorisée entre la première face F1 du conteneur et le premier étui Et1 de la rangée et, l'insertion du deuxième mors 31 de la pince entre le dernier étui Et2 de la rangée et la deuxième face F2 du conteneur s'effectuent par la descente du premier mors et du deuxième mors respectivement dans le premier inter-espace It1 et le deuxième inter-espace It2. Au cours de cette descente, on peut avantageusement rapprocher progressivement les deux mors, premier mors 30 et second mors 31, et jusqu'à agripper la rangée d'étui lorsque les deux mors sont plongés en fin de course basse dans le conteneur, et comme illustré à titre indicatif à la figure 20.

Une deuxième possibilité de formation des inter-espaces It1 et It2 est illustrée aux figures 39 et 40.

Selon cette seconde possibilité, les étuis de la rangée d'étuis, y compris le premier étui et le dernier étui de la rangée, présentant une portion débordante, du côté de l'ouverture, les étuis s'étendant en hauteur delà du bord supérieur de la première face et du bord supérieur de la deuxième face du conteneur alors ouvert.

A la figure 39, on remarque que le premier étui It1 s'étant dans sa position à plat, depuis le fond du conteneur, en appui sur ce dernier et jusqu'au travers l'ouverture du conteneur. Une portion supérieure de l'étui It1 dépasse au-dessus de la première face F1 du conteneur. De même, le dernier Itd s'étant dans sa position à plat, depuis le fond du conteneur, en appui sur ce dernier et jusqu'au travers l'ouverture du conteneur. Une portion supérieure de cet étui Itd dépasse au-dessus de la deuxième face F2 du conteneur.

On peut obtenir les étuis ainsi débordant de l'ouverture du conteneur, par exemple lorsque le bras robotisé met en œuvre une coupe périphérique le long des première, deuxième, troisième et quatrième face du conteneur, et à un niveau de coupe situé en dessous des étuis lorsque ces derniers reposent sur la cinquième face F5 formant le fond du conteneur Ca. Une telle coupe périphérique est décrite dans la présente divulgation.

Selon cette seconde possibilité, le procédé prévoit, préalablement à /**d**/ :
- les positionnements des extrémités distales respectivement du premier mors 30 et du second mors 31 en vis-à-vis des portions débordantes du premier étui Et1 et du dernier étui Etd de la rangée,
- la commande du mécanisme d'actionnement pour rapprocher les deux mors de la pince de sorte à rapprocher partiellement les deux mors de la pince de sorte à resserrer le premier étui et le dernier étui de la rangée d'étuis, sans agripper la rangée d'étui, en créant d'une part, un premier inter-espace Et1 entre la première face F1 et le premier étui Et1 de la rangée, et, d'autre part, un deuxième inter-espace It2 entre le dernier étui Etd et la deuxième face F2du conteneur.

Ainsi, et à la figure 39, la commande du premier mors 30 et du second mors 31 selon le sens de flèche assure une compression partielle de la rangée qui permet de créer les deux inter-espaces It1 et It2, ce serrage étant toutefois insuffisant en soi pour agripper la rangée d'étuis.

Ainsi à /**d**/ l'insertion du premier mors 30 de la pince entre la première face 30 du conteneur et le premier étui Et1 de la rangée et, l'insertion du deuxième mors de la pince 31 entre le dernier étui Etd de la rangée et la deuxième face F2 du conteneur s'effectuent par la descente du premier mors 30 et du deuxième mors 31 respectivement dans le premier inter-espace It1 et le deuxième inter-espace It2. Au cours de cette descente, on peut avantageusement rapprocher progressivement les deux mors premier mors et second mors, et jusqu'à agripper la rangée d'étui lorsque les deux mors sont plongés en fin de course basse dans le conteneur.

Selon une troisième possibilité, la première face F1 et la deuxième face F2 du conteneur présentant du côté de l'ouverture du conteneur ouvert, respectivement une première encoche Ec1 et une seconde encoche Ec2, débouchantes du côté de l'ouverture. Ainsi, et à la figure 41, on remarque que le conteneur prévoit une encoche Ec1, débouchante au niveau de l'ouverture, sur la première face F1 et une seconde encoche Ec2 débouchante au niveau de l'ouverture sur la deuxième face. Ces encoches Ec1 et Ec2 sont de dimension suffisante pour être traversées par les extrémités distales des premier et second mors 30,31.

Selon cette troisième possibilité, le procédé prévoit préalablement à /**d**/ : les positionnements des extrémités distales respectivement du premier mors et du second mors en vis-à-vis à l'extérieur du conteneur, respectivement en regard de la première encoche Ec1 et de la seconde encoche Ec2,
- la commande du mécanisme pour rapprocher partiellement les deux mors 30,31 de la pince, au travers des encoches Ec1, Ec2, de sorte à resserrer le premier étui Et1 et le dernier étui Et2 de la rangée, sans agripper la rangée d'étui, en créant d'une part, un premier inter-espace Et1 entre la première face F1 et le premier étui Et1 de la rangée, et, d'autre part, un deuxième inter-espace It2 entre le dernier étui Etd et la deuxième face F du conteneur.

Ainsi, et à l'instar de la figure 39, la commande du premier mors 30 et du second mors 31 selon le sens de flèche assure une compression partielle de la rangée qui permet de créer les deux inter-espaces It1 et It2, ce serrage étant toutefois insuffisant en soi pour agripper la rangée d'étuis.

Ainsi et à /**d**/ l'insertion du premier mors 30 de la pince motorisée entre la première face 30 du conteneur et le premier étui Et1 de la rangée et, l'insertion du deuxième mors de la pince 31 entre le dernier étui Etd de la rangée et la deuxième face F2 du conteneur s'effectuent par la descente du premier mors 30 et du deuxième mors 31 respectivement dans le premier inter-espace It1 et le deuxième inter-espace It2. Au cours de cette descente, on peut avantageusement rapprocher progressivement les deux mors premier mors et second mors, et jusqu'à agripper la rangée d'étui lorsque les deux mors sont plongés en fin de course basse dans le conteneur.

Ainsi, et selon les trois premières possibilités, on peut utiliser les deux mors premier mors 30 et second mors 31 de la pince motorisée pour créer les deux inter-espaces It1 et It2, préalablement aux insertions des deux mors dans ces inter-espaces.

Selon une autre possibilité, ces premier et second inter-espaces It1 et It2 peuvent être créés avec un moyen distinct de la pince motorisée. Par exemple et selon une quatrième possibilité illustrée aux figures 42 et 43, le procédé prévoit préalablement à /**d**/ :
- un premier basculement du conteneur ouvert de sorte à ce que la gravité accumule les étuis de la rangée contre l'une des faces consistant en la première face F1 du conteneur ou la deuxième face F2 conteneur, et en créant un inter-espace (It1 ou It2) entre l'autre face consistant en la deuxième face ou la première face, et en insérant l'extrémité distale de l'un des deux mors 30,31 dans cet inter-espace (It1 ou It2),
- un deuxième basculement du conteneur ouvert de sorte que la gravité accumule les étuis de la rangée contre l'autre des faces consistant en la deuxième face F2 ou de la première face F1, et en créant un autre inter-espace (It2 ou It1) entre ladite une face, et en insérant l'extrémité distale de l'autre des deux mors 30,31 dans cet autre inter-espace.

Par exemple, et à la figure 42, le premier basculement d'un angle α du conteneur autour d'un axe parallèle Y permet d'incliner le conteneur, et de sorte que les étuis s'accumulent en se resserrant contre la première face F1 du conteneur, ce qui engendre le deuxième inter-espace It2 entre le dernier étui Etd et la deuxième face F2. L'extrémité distale du second mors 31 est plongée dans ce second inter-espace It2.

Ensuite et à la figure 43, le deuxième basculement d'un angle β autour d'un axe de rotation parallèle à l'axe Y permet d'incliner le conteneur en sens inverse et de sorte que les étuis s'accumulent en se resserrant contre la deuxième face F2 du conteneur, ce qui engendre le premier inter-espace It1 entre le premier étui Et1 et la première face F1. L'extrémité distale du premier mors 30 est plongée dans ce second inter-espace It2 et alors que l'extrémité du second mors 31 est déjà présente dans le premier inter-espace It1.

Ainsi et selon cette quatrième possibilité, à /**d**/ l'insertion du premier mors de la pince entre la première face du conteneur et le premier étui de la rangée et, l'insertion du deuxième mors de la pince entre le dernier étui de la rangée et la deuxième face du conteneur s'effectuent ensuite par la descente des deux mors dans le conteneur. Au cours de cette descente, on peut avantageusement rapprocher progressivement les deux mors premier mors et second mors, et jusqu'à agripper la rangée d'étui lorsque les deux mors sont plongés en fin de course basse dans le conteneur.

Le premier basculement et le deuxième basculement du conteneur peuvent ici être mis en œuvre par un basculeur sur lequel repose le conteneur.

Selon un mode de réalisation, le procédé peut prévoir, préalablement à /**d**/ et /**e**/ l'ouverture du conteneur lorsque le conteneur repose sur une surface par l'intermédiaire de la cinquième face F5 du conteneur par :
- /**c**/ le pilotage du bras robotisé de sorte à ouvrir ou retirer la sixième face F6 du conteneur formant couvercle.

Selon, un mode de réalisation (non illustré), et lorsque le conteneur est un carton, la sixième face du conteneur formant couvercle, peut résulter de la fermeture de plusieurs volets du carton, notamment maintenus fermés par une bande adhésive. Le bras robotisé peut alors être piloté de sorte à retirer la bande adhésive, puis relever, un à un, les volets de fermeture pour procéder à l'ouverture du conteneur. Cette solution d'ouverture permet de conserver l'intégrité du conteneur, en particulier du carton, ce qui peut permettre, une fois le conteneur vidé des étuis, de le plier à plat notamment par le bras robotisé, lors de son évacuation.

Selon une autre solution avantageuse, limitant le temps cycle, il est possible de retirer la sixième face F6 du conteneur formant le couvercle, par la mise en œuvre d'une coupe périphérique, qui permet notamment de retirer le couvercle d'un seul tenant, et avantageusement sans avoir à retirer la bande adhésive et ouvrir un à un les volets de fermeture lorsque présents.

Selon un mode de réalisation, cette coupe périphérique peut être mise en œuvre par le bras robotisé lui-même. A cet effet, le système de préhension 2 manipulé par le bras robotisé 1 comprend un organe de coupe 4. Lors de /**c**/ le bras robotisé manipulant l'organe de coupe 4 est piloté de sorte que l'organe de coupe effectue une coupe périphérique continue le long des première, deuxième, troisième et quatrième faces du conteneur, et de sorte à permettre le retrait de la sixième face F6 formant couvercle.

L'organe de coupe 4 peut être une lame, notamment du type cutter, et présentant une forme en crochet, tel qu'illustré à droite sur la figure 15. Cette forme en crochet et la lame évite de marquer les étuis à l'intérieur du conteneur, lorsque l'outil de coupe 4 assure la coupe périphérique (comme visible à gauche sur la figure 15).

Selon un mode de réalisation, et successivement à /**c**/ on pilote le bras robotisé 1 de sorte à saisir le couvercle détaché par la coupe périphérique, puis à évacuer ledit couvercle.

Selon un mode de réalisation, le système de préhension 2 peut comprend un préhenseur à ventouse 7. Ce préhenseur à ventouse 7 peut permettre au bras robotisé de saisir le couvercle détaché par la coupe périphérique, puis de l'évacuer comme illustré à titre indicatif à la figure 16.

Le préhenseur à ventouse peut être avantageusement un préhenseur bi-zones, à deux zones de saisie 70,71 indépendantes, et comme repérées à titre d'exemple à la figure 24.

Lorsque le conteneur recevant la rangée d'étuis comprend une feuille de protection Fp (voir figure 17) disposée intérieur au conteneur, en intercalaire entre le couvercle et les étuis, ce préhenseur bi-zones permet de réduire le temps de cycle de l'évacuation du couvercle et de l'étui.

La saisie du couvercle détaché par la coupe périphérique est assurée par l'une des deux zones 70,71 du préhenseur à ventouse, et on saisit la feuille de protection Fp, par l'autre des deux zones 70,71 du préhenseur à ventouse 7, avant d'évacuer conjointement le couvercle et la feuille de protection par le bras robotisé saisis par les deux zones du préhenseur à ventouse 7. L'évacuation conjointe du couvercle et de la feuille de protection nécessite un seul déplacement du bras robotisé 1. Le bras robotisé vient alors relâcher le couvercle, voire la feuille de protection dans une poubelle et comme visible à la figure 18.

Selon un mode de réalisation, ladite installation comprend une table de positionnement 5, comprenant un plan de pose s'étendant suivant des directions X et Y, ladite table de positionnement 5 comprenant des butées 50 coopérant avec au moins deux faces perpendiculaires du conteneur assurant le calage du conteneur et dans lequel les insertions des mors de la pince selon /d/, et/ou l'ouverture du conteneur selon /**c**/ sont effectués après calage du conteneur par les butées suivant les directions X et Y.

La fonction première de la table de positionnement est d'assurer le calage du conteneur dans une position déterminée par rapport au bras robotisé.

Selon un mode de réalisation, ladite installation automatisée comprend au moins une zone de stockage Z1 ; Z2 des conteneurs empilés les uns sur les autres sur une palette, et dans lequel on procède au chargement de la table de positionnement par :
- /**b**/ la saisie d'un conteneur empilé sur la palette par le bras robotisé 1 puis le pilotage du bras robotisé pour procéder à la dépose du conteneur Ca sur la table de positionnement 5.

La saisie du conteneur par le système de préhension peut être obtenue par le préhenseur à ventouse. Dans le cas d'un préhenseur 7 bi-zones 70,71, le deux zones indépendantes 70,71 peuvent être activées pour maximiser la sécurité de la saisie.

Ainsi la figure 1 illustre à titre d'exemple, une installation robotisée qui comprend le bras robotisé 1, la table de positionnement 5 et deux zones de stockages Z1 et Z2, chacune recevant des conteneurs empilés sur une palette.

Chaque zone de stockage Z1 ou Z2, ou plus généralement ladite au moins une zone de stockage peut comprendre un châssis ancré au sol assurant le positionnement de la palette en une position déterminée par rapport au bras robotisé 1, et à la table de positionnement.

Ce châssis comprend en U peut être formé de trois poutre métalliques, ancrées au sol formant respectivement les trois ailes du U. L'ouverture du U du châssis est orientée vers l'entrée de la zone de stockage.

Lors du chargement, un opérateur peut déplacer la palette recevant les conteneurs, typiquement à l'aide d'un transpalette et glisser la palette entre les deux ailes parallèles du U, jusqu'à la mise en butée de la palette avec l'aile de fond du châssis U et comme visible à droite de la figure 2, et comme visible à la figure 30.

Un système de détection 8 peut vérifier le bon positionnement de la palette dans le châssis en U, par détection d'un coin de la palette au niveau d'un angle du châssis. Ainsi et sur la vue de gauche, à la figure 2, le coin de la palette au niveau d'un angle du châssis en U vient interrompre un faisceau de détection du système de détection. L'interruption du faisceau de détection est interprétée comme un positionnement correct de la palette.

On remarque encore que la palette qui peut être une palette EPAL/EURO, présentant une dimension de longueur supérieure à sa dimension à largeur, et que le châssis en U, reçoit la palette au jeu d'emboitement près, et selon deux sens possibles de la palette seulement. Quels que soient les sens possibles de la palette, l'axe longitudinal de la palette passe par un plan de symétrie du châssis en U.

La figure 31, illustre la superposition des conteneurs sur la palette, et selon deux sens possibles permis par le châssis en U. On remarque que les conteneurs présentent chacun un marquage visuel Mv, en l'occurrence une flèche, qui permet permettre de connaître l'orientation de la palette, et d'autre part les orientations de chaque conteneur Ca. A cet effet, le système de préhension 2 est équipé d'une caméra 6, visible à la figure 25.

Préalablement à /**b**/, on procède à la reconnaissance du conteneur par :
- /a/ le pilotage du bras robotisé manipulant le système de préhension de sorte à cibler dans le champs de vision 60 de la caméra 6 le marquage visuel Mv d'un conteneur empilé en haut de la pile,
et dans lequel ladite installation présentant :
- un module de reconnaissance configuré pour reconnaître le marquage visuel Mv de l'image ciblée par la caméra 6 et pour déterminer l'angle du marquage visuel Mv du conteneur dans le référentiel de la table de positionnement 5 et,
- un module de calcul configuré pour générer, à partir de l'angle du marquage déterminé par le module de reconnaissance, des instructions de guidage pour assurer en /**b**/, la saisie du conteneur ciblé dans le champs de la caméra et la dépose du conteneur sur la table de positionnement selon une orientation déterminée du marquage visuel dans le référentiel de la table de positionnement 5.

On assure ainsi une dépose du conteneur sur la table de positionnement 5, dans une orientation déterminée du conteneur, et donc de la rangée d'étuis.

Selon un mode de réalisation, et selon le sens des conteneurs de la palette, et donc des étuis à l'intérieur des conteneurs, il peut être nécessaire de procéder à un retournement des conteneurs. Selon un mode de réalisation, on procède au retournement à 180° du conteneur entre la saisie du conteneur en /**b**/, d'une part, pour laquelle on assure la saisie d'un conteneur empilé sur la palette par le bras robotisé puis le pilotage du robot pour procéder à la dépose du conteneur sur la table de pose, et d'autre part, le calage du conteneur suivant les directions X et Y sur les butées 50 de la table de positionnement 5.

Selon un mode de réalisation, illustré aux figures 9 à 14 le retournement à 180° du conteneur est assuré pour partie, en /**b**/ par le bras robotisé lors de la dépose du conteneur Ca sur la table de positionnement 5, et pour l'autre partie par un basculeur commandé 51 par un actionneur équipant la table de positionnent 5. Par exemple, le bras robotisé permet de pivoter le conteneur de 90°, les 90° restant pour assurer le retournement du conteneur de 180 ° étant assurés par un basculeur 51 de la table de positionnement 5.

Ainsi, et sur les trois vues de la figure 9, on remarque que le système de préhension fait pivoter le conteneur Ca de 90° (depuis la vue de gauche jusqu'à la vue de droite).

Le conteneur ainsi déposé se trouve entre un mors mobile 53 et un mors fixe 54 d'un basculeur 51. Le châssis du basculeur est alors reçu dans une fenêtre du plan de pose de la table de positionnement 5, le châssis prolongeant le plan de la table de positionnent 5 dans cet état du basculeur 51. Un cylindre double action 52 est alors commandé de sorte à fermer les mors 53, 54 sur le conteneur. Les valves du circuit fluidique sont commandées de sorte que le piston du vérin est soumis à une pression Pa (faible).

Le conteneur Ca est alors agrippé par les mors 53, 54 du basculeur et comme visible à la figure 11, puis le châssis du basculeur, y compris les mors 53, 54 sont basculés de 90°, comme visible à la figure 12.

Les mors 53, 54 du basculeur sont écartés grâce au vérin double action, puis une butée mobile 50 vient caler le conteneur contre le châssis du basculeur 51, alors saillant du plan de la table dans cet état du basculeur, et avant que les mors 53, 54 du basculeur soient de nouveau rapprochés l'un vers l'autre pour assurer la saisie et le calage du conteneur. Lors de cette deuxième fermeture des mors 53,54 mobile et fixe, les valves du circuit fluidique sont commandées de sorte que le piston du vérin est soumis de préférence à une pression Pb, inférieure à la pression Pa. Les mors 53, 54 viennent alors en appui contre la première face F1 et la deuxième face F2 du conteneur et comme compréhensible de la figure 19, et mais avec une pression maitrisée, et en vue de faciliter l'extraction des étuis par le robot.

Selon un mode de réalisation avantageux, ladite installation peut comprendre deux zones de stockage Z1, Z2 des conteneurs consistant en une première zone de stockage Z1 et une deuxième zone de stockage Z2 chacune recevant des conteneurs Ca empilés sur une palette (PL1 ou PL2), chacune des zones de stockage, accessible par le bras robotisé 1 pour la mise en œuvre de /**b**/.

Ces deux zones de stockage Z1, Z2 sont séparées par une barrière physique ou une barrière de surveillance virtuelle, les deux zones de stockage présentant respectivement deux entrées indépendantes E1, E2 pour un opérateur Op et afin de permettre le chargement des zones Z1 et Z2 de manière indépendante.

Ladite installation comprend des moyens de détection d'une intrusion de l'opérateur, configurés pour détecter en les distinguant, une intrusion dans la première zone de stockage Z1 et dans la deuxième zone de stockage Z2.

Avantageusement, le module de pilotage et de commande du bras robotisé est configuré pour travailler en temps masqué dans l'une des deux zones de stockage Z1, Z2, éventuellement à vitesse réduite, lorsqu'une intrusion est détectée dans l'autre zone de stockage. Cela permet au robot de continuer à travailler en temps masqué dans l'une des deux zones de stockage Z1 ou Z2 et lorsque l'opérateur intervient dans l'autre zone de stockage, par exemple pour son chargement.

### Exemple de cycle de fonctionnent de l'installation robotisée

Nous décrivons en détail un cycle complet de fonctionnement de l'installation robotisée qui est illustrée des figures 3 jusqu'à la figure 23.

A la figure 3, le robot est en position d'attente dans la zone Z3, de sorte à permettre à l'opérateur de charger la première zone de stockage Z1 ou la deuxième zone de stockage Z2, alors vides.

A la figure 4, un opérateur a placé une palette avec conteneurs Ca dans le châssis en U de la deuxième zone de stockage, ainsi qu'une poubelle.

A la figure 5, le bras robotisé utilise un capteur TOR (tout ou rien) présent sur le système de préhension 2 pour vérifier la présence des conteneurs sur la première couche de conteneur de la palette.

A la figure 6, le bras robotisé prend une image du premier conteneur qu'il trouve dans le champ de vision 60 de la caméra 6, selon /a/ ce qui permet à un module de calcul de l'installation de déterminer le sens de la palette, et de déterminer l'orientation du conteneur Ca.

A la figure 7, le bras robotisé utilise le préhenseur à ventouse 7 pour agripper le conteneur Ca, puis le bras robotisé est piloté de sorte à déposer le conteneur Ca sur la table de positionnement 5 à la figure 8, dans une orientation déterminée du conteneur, et selon /**b**/.

Lors de cette dépose, et comme illustrée à la figure 9 (de gauche à droite selon les trois vues), le bras robotisé procède à un pivotement de 90° du conteneur.

Le conteneur est alors déposé entre un mors fixe 54 et un mors mobile 53, au-dessus du châssis du basculeur 51 qui est reçu dans une fenêtre du plan de pose de la table de positionnement 5. Dans cet état du basculeur, le châssis reçu dans la fenêtre prolonge le plan de pose de la table de positionnement 5. A la figure 11, le mors mobile 53 est contraint par un vérin soumis à une pression Pa vers le mors fixe 54 du basculeur 51, ce qui permet d'agripper fermement le conteneur Ca en vue de son pivotement par le basculeur 51.

A la figure 12, le châssis du basculeur 51 est actionné en rotation de 90°, par un vérin de retournement ce qui permet d'obtenir le retournement à 180° du conteneur, assuré pour partie, en /**b**/ par le bras robotisé lors de la dépose du conteneur et comme illustré à la figure 9, et pour l'autre partie par le basculeur commandé 51 par un actionneur de retournement (non illustré) équipant la table de positionnement 5, et comme illustrée à cette figure 12.

A la figure 13, les mors 53 et 54 du basculeur relâchent le conteneur, puis une butée mobile 55 vient caler le conteneur contre le châssis qui est alors saillant et perpendiculaire au plan de pose de la table de positionnement 5 dans cet état du basculeur 51, et avant que l'actionneur 52 ne procède de nouveau à la fermeture des mors 53,54 comme illustré à la figure 14. Lors de cette nouvelle saisie, le piston du vérin de l'actionneur 52, est soumis à une pression Pb, inférieure à Pa.

A la figure 15, et selon /**c**/ on pilote le bras robotisé de sorte à retirer la sixième face F6 du conteneur formant couvercle, grâce à un outil de coupe 6, en l'espèce une lame en forme de crochet qui effectue une coupe périphérique le long des première F1, deuxième F2, troisième F3 et quatrième face F4 du conteneur Ca.

A la figure 16, le préhenseur à ventouse 7 agrippe le couvercle détaché par la coupe effectué en /**c**/, et à la figure 17 le film de protection Fp, respectivement par activation des deux zones indépendantes 70, 71 du préhenseurs à ventouse, puis le bras robotisé est déplacé jusqu'à positionner le préhenseur à ventouse 7 à l'aplomb de la poubelle. La désactivation des deux zones du préhenseur à ventouse assure le relâchement du couvercle et de la feuille de protection Fp dans la poubelle.

A la figure 19, le premier mors 30 et le deuxième mors 31 de la pince motorisé sont positionnés de sorte que les extrémités distales des mors viennent en appui respectivement contre les portions débordantes de la première face F1 et la deuxième face F2 du conteneur Ca, puis les mors sont écartés de sorte à faire bailler le conteneur engendrant, d'une part, le premier inter-espace It1 entre le première face F1 et le premier étui It1, et d'autre part, le deuxième inter-espace It2 entre le deuxième face F2 et le dernier étui Itd.

A la figure 20, le premier mors 30 et le deuxième mors 31 de la pince motorisée sont insérés à la descente respectivement dans les premier et second inter-espaces It1 et It2 et selon /**d**/, le premier mors 30 alors inséré entre la première face F1 et le premier étui It1, et le second mors alors inséré entre la deuxième face F2 et le dernier étui Itd de la rangée. Au cours de la descente des mors 30, 31 dans le conteneur, le premier mors 30 et le deuxième mors 31 peuvent être rapprochés et jusqu'à agripper la rangée d'étuis, en fin de course basse, telle qu'illustrée à la figure 20.

A la figure 21, le bras robotisé extrait la rangée d'étuis du conteneur saisi par les mors 53,54 et dépose la rangée d'étuis sur la ligne d'emballage Lg par écartement des premier et second mors 30,31. La dépose peut être effectuée sur une rampe inclinée comme visible à la figure 21

A la figure 22, le bras robotisé 1 vient saisir le conteneur vide, précédemment basculé de 90° par le basculeur, en sens inverse par rapport à la figure 12, grâce au préhenseur à ventouse 7, après écartement des mors 53,54 du basculeur puis évacue le conteneur vide et le relâche dans la poubelle le conteneur vide, et comme visible à la figure 23. Le cycle est terminé.

### Liste des signes de référence

- 1. Bras robotisé,
- 2. Système de préhension,
- 3. Pince motorisé,
- 30, 31. Premier mors et deuxième mors,
- 4. Outil de coupe tel que lame,
- 5. Table de positionnement,
- 50. Butées de calage,
- 51. Basculeur,
- 52. Actionneur de la pince du basculeur,
- 53,54. Mors mobile et mors fixe du basculeur,
- 6. Caméra,
- 60. Champs de la caméra,
- 7. Système de ventouse,
- 70, 71. Deux zones de saisie indépendantes (ventouse),
- 8. Système de détection,
- Ca. Conteneur parallélépipédique,
- Mv. Marquage visuel indicatif de l'orientation du conteneur,
- F1, F2, F3, F4, F5, F6. Respectivement première, deuxième, troisième, quatrième, cinquième et sixième face du conteneur,
- It1 It2. Premier inter-espace et deuxième inter-espace,
- db. Portion débordante des faces (F1 et F2) du conteneur
- Lg. Ligne d'emballage,
- Et. Etuis,
- Et1, Etd. Premier étui et dernier étui de la rangée L1, L2, L3, L3. Lignes de pliage,
   Eb. Embouchure,
   Vf. Volets de fermeture.

## Revendications

1. Procédé robotisé de chargement d'étuis (Et) sur une ligne d'emballage (Lg) à partir d'étuis contenus dans un conteneur parallélépipédique fermé, ,
et dans lequel lesdits étuis (Et) comprenant chacun quatre lignes de pliage (L1, L2, L3, L4) configurées pour permettre le stockage des étuis dans leur position à plat (P1), et autoriser le dépliage de l'étui autour des quatre lignes de pliage (L1, L2, L3, L4) dans une position en volume (P2) où l'étui définit un volume tubulaire avec au moins une embouchure (Eb) autorisant le remplissage de l'étui, l'étui présentant des volets de fermeture (Vf) configurés pour permettre la fermeture de ladite l'embouchure
et dans lequel les étuis (Et) sont reçus dans le conteneur (Ca) dans leur position à plat (P1), parallèlement les uns contre les autres sous forme d'une rangée d'étuis, s'étendant entre deux faces opposées du conteneur parallélépipédique, dites première face (F1) et deuxième face (F2), la rangée d'étui à plat présentant un premier étui (Et1) de la rangée, à plat, disposé parallèle à la première face (F1) du conteneur, en regard de la première face (F1), et un dernier étui (Etd) de la rangée à plat, parallèle à la deuxième face (F2), en regard de la deuxième face, les étuis s'étendant suivant la direction des lignes de pliage entre une troisième face (F3) et une quatrième face (F4) du conteneur, opposées, la cinquième face (F5) et la sixième face (F6) définissant le fond et le couvercle du conteneur et dans lequel ledit procédé est mis en œuvre par une installation comprenant un bras robotisé (1) manipulant un système de préhension (2) présentant une pince motorisée (3) avec deux mors consistant en un premier mors (30) et un deuxième mors (31), ainsi qu'un mécanisme d'actionnement configuré pour écarter et rapprocher les deux mors,
procédé dans lequel on procède au chargement de la ligne d'emballage (Lg), après ouverture du conteneur (Ca) par :
- /**d**/ insertion du premier mors (30) de la pince entre la première face (F1) du conteneur et le premier étui (Et1) de la rangée d'étuis et, insertion du deuxième mors (31) de la pince entre le dernier étui (Etd) de la rangée d'étuis et la deuxième face (F2) du conteneur, et rapprochement du premier mors (30) et du deuxième mors (31) alors insérés dans le conteneur jusqu'à agripper la rangée d'étuis,
- /e/ pilotage du bras robotisé de sorte à extraire la rangée d'étuis du conteneur saisie par la pince motorisée (3) et à charger la ligne d'emballage (Lg) avec la rangée d'étuis, après le relâchement de la rangée d'étuis par écartement des deux mors (30,31) de la pince motorisée.

2. Procédé robotisé de chargement d'étuis selon la revendication 1, dans lequel la première face (F1) et la deuxième face (F2) du conteneur présentant respectivement des portions de hauteur débordantes (db) s'étendant au-dessus de la rangée d'étuis, du côté de l'ouverture du conteneur ouvert, le procédé prévoyant préalablement à /**d**/ :
- les positionnements des extrémités distales respectivement du premier mors (30) et du second mors (31) en vis-à-vis des portions débordantes (db) de la première face (F1) et de la deuxième face (F2) du conteneur, et,
- la commande du mécanisme d'entrainement pour écarter les deux mors (30,31) de la pince motorisée et ainsi écarter la première face (F1) de la deuxième face (F2) du conteneur, en générant, d'une part, un premier inter-espace (It1) entre la première face (F1) et le premier étui (Et1) de la rangée étuis, et, d'autre part, un deuxième inter-espace (lt2) entre le dernier étui (Et2) et la deuxième face (F2) de la rangée
et de sorte qu'à /**d**/ l'insertion du premier mors (30) de la pince motorisée entre la première face (F1) du conteneur et le premier étui (Et1) de la rangée et, l'insertion du deuxième mors (31) de la pince entre le dernier étui (Et2) de la rangée et la deuxième face (F2) du conteneur s'effectuent par la descente du premier mors et
du deuxième mors respectivement dans le premier inter-espace (It1) et le deuxième inter-espace (It2).

3. Procédé robotisé de chargement d'étuis selon la revendication 1, dans lequel la première face (F1) et la deuxième face (F2) du conteneur présentant du côté de l'ouverture du conteneur ouvert, respectivement une première encoche (Ec1) et une seconde encoche (Ec2), débouchantes du côté de l'ouverture, le procédé prévoyant préalablement à /**d**/ :
les positionnements des extrémités distales respectivement du premier mors et du second mors en vis-à-vis à l'extérieur du conteneur, respectivement en regard de la première encoche (Ec1) et de la seconde encoche (Ec2)
- la commande du mécanisme pour rapprocher partiellement les deux mors (30,31) de la pince, au travers des encoches (Ec1, Ec2) de sorte à resserrer le premier étui (Et1) et le dernier étui (Et2) de la rangée, sans agripper la rangée d'étuis, en créant d'une part, un premier inter-espace (Et1) entre la première face (F1) et le premier étui (Et1) de la rangée, et, d'autre part, un deuxième inter-espace (lt2) entre le dernier étui (Etd) et la deuxième face (F2)du conteneur et de sorte qu'à /**d**/ l'insertion du premier mors (30) de la pince motorisée entre la première face (30) du conteneur et le premier étui (Et1) de la rangée et, l'insertion du deuxième mors de la pince (31) entre le dernier étui (Etd) de la rangée et la deuxième face (F2) du conteneur s'effectuent par la descente du premier mors (30) et du deuxième mors (31) respectivement dans le premier inter-espace ((lt1) et le deuxième inter-espace (It2).

4. Procédé robotisé de chargement d'étuis selon la revendication 1, dans lequel les étuis de la rangée d'étuis, y compris le premier étui et le dernier étui de la rangée, présentant une portion débordante, du côté de l'ouverture, les étuis s'étendant en hauteur delà du bord supérieur de la première face et du bord supérieur de la deuxième face du conteneur alors ouvert, le procédé prévoyant préalablement à /**d**/ :
- les positionnements des extrémités distales respectivement du premier mors (30) et du second mors (31) en vis-à-vis des portions débordantes du premier étui (Et1 ) et du dernier étui (Etd) de la rangée
- la commande du mécanisme d'actionnement pour rapprocher les deux mors de la pince de sorte à rapprocher partiellement les deux mors de la pince de sorte à resserrer le premier étui et le dernier étui de la rangée d'étuis, sans agripper la rangée d'étui, en créant d'une part, un premier inter-espace (Et1) entre la première face (F1) et le premier étui (Et1) de la rangée, et, d'autre part, un deuxième inter-espace (lt2) entre le dernier étui (Etd) et la deuxième face (F2)du conteneur
et de sorte qu'à /**d**/ l'insertion du premier mors (30) de la pince entre la première face (30) du conteneur et le premier étui (Et1) de la rangée et, l'insertion du deuxième mors de la pince (31) entre le dernier étui (Etd) de la rangée et la deuxième face (F2) du conteneur s'effectuent par la descente du premier mors (30) et du deuxième mors (31) respectivement dans le premier inter-espace ((lt1) et le deuxième inter-espace (It2).

5. Procédé robotisé de chargement d'étuis selon la revendication 1, dans lequel les étuis de la rangée, le procédé prévoyant préalablement à /**d**/ :
- un premier basculement du conteneur ouvert de sorte à ce que la gravité accumule les étuis de la rangée contre l'une des faces consistant en la première face (F1) du conteneur ou la deuxième face (F2) conteneur, et en créant un inter-espace (It1 ou It2) entre l'autre face consistant en la deuxième face ou la première face, et en insérant l'extrémité distale de l'un des deux mors (30,31) dans cet inter-espace (It1 ou It2),
- un deuxième basculement du conteneur ouvert de sorte que la gravité accumule les étuis de la rangée contre l'autre des faces consistant en la deuxième face (F2) ou de la première face (F1), et en créant un autre inter-espace (lt2 ou It1) entre ladite une face, et en insérant l'extrémité distale de l'autre des deux mors (30,31) dans cet autre inter-espace,
et de sorte qu'à /**d**/ l'insertion du premier mors de la pince entre la première face du conteneur et le premier étui de la rangée et, l'insertion du deuxième mors de la pince entre le dernier étui de la rangée et la deuxième face du conteneur s'effectuent ensuite la descente des deux mors.

6. Procédé robotisé de chargement d'étuis selon l'une des revendications 1 à 5 prévoyant, préalablement à /**d**/ et /**e**/ l'ouverture du conteneur lorsque le conteneur repose sur une surface par l'intermédiaire de la cinquième face (F5) du conteneur par :
- /**c**/ le pilotage du bras robotisé de sorte à ouvrir ou retirer la sixième face (F6) du conteneur formant couvercle.

7. Procédé robotisé de chargement d'étuis selon la revendication 6, dans lequel le système de préhension (2) manipulé par le bras robotisé (1) comprend un organe de coupe (4), et dans lequel à /**c**/ le bras robotisé manipulant l'organe de coupe est piloté de sorte que l'organe de coupe (6) effectue une coupe périphérique continue le long des première, deuxième, troisième et quatrième faces du conteneur, et de sorte à permettre le retrait de la sixième face (F6) formant couvercle.

8. Procédé robotisé de chargement d'étuis selon la revendication 7, dans lequel, successivement à /**c**/ on pilote le bras robotisé (1) de sorte à saisir le couvercle détaché par la coupe périphérique, puis à évacuer ledit couvercle.

9. Procédé robotisé de chargement d'étuis selon l'une des revendications 1 à 8 dans lequel ladite installation comprend une table de positionnement (5), comprenant un plan de pose s'étendant suivant des directions X et Y, ladite table de positionnement (5) comprenant des butées (50) coopérant avec au moins deux faces perpendiculaires du conteneur assurant le calage du conteneur et dans lequel les insertions des mors de la pince selon /d/, et/ou l'ouverture du conteneur selon /**c**/ sont effectués après calage du conteneur par les butées (50) suivant les directions X et Y

10. Procédé robotisé de chargement d'étuis selon la revendication 9, dans lequel ladite installation automatisée comprend au moins une zone de stockage (Z1 ; Z2) des conteneurs empilés les uns sur les autres sur une palette, et dans lequel on procède au chargement de la table de positionnement par :
- /**b**/ la saisie d'un conteneur empilé sur la palette par le bras robotisé puis le pilotage du bras robotisé pour procéder à la dépose du conteneur (Ca) sur la table de positionnement (5).

11. Procédé robotisé de chargement d'étuis selon la revendication 10, dans lequel lesdits conteneurs comprenant un marquage visuel (Mv) indicatif de l'orientation du conteneur suivant plan horizontal XY, et dans le système de préhension (2) est équipé d'une caméra (6), et dans lequel préalablement à /**b**/, on procède à la reconnaissance du conteneur par :
- /a/ le pilotage du bras robotisé manipulant le système de préhension de sorte à cibler dans le champs de vision (60) de la caméra (6) le marquage visuel (Mv) d'un conteneur empilé en haut de la pile,
et dans lequel ladite installation présentant :
- un module de reconnaissance configuré pour reconnaître le marquage visuel (Mv) de l'image ciblée par la caméra (6) et pour déterminer l'angle du marquage du conteneur dans le référentiel de la table de positionnement (5) et,
- un module de calcul configuré pour générer, à partir de l'angle du marquage déterminé par le module de reconnaissance, des instructions de guidage pour assurer en /**b**/, la saisie du conteneur ciblé dans le champs de la caméra et la dépose du conteneur sur la table de positionnement selon une orientation déterminée du marquage visuel dans le référentiel de la table de positionnement.

12. Procédé robotisé de chargement d'étuis selon la revendication 10 ou 11, dans lequel on procède au retournement à 180° du conteneur entre la saisie du conteneur en /**b**/, d'une part, pour laquelle on assure la saisie d'un conteneur empilé sur la palette par le bras robotisé puis le pilotage du robot pour procéder à la dépose du conteneur sur la table de pose, et d'autre part, le calage du conteneur suivant les directions X et Y sur les butées de la table de positionnement (5).

13. Procédé robotisé de chargement d'étuis selon la revendication 12, dans lequel le retournement à 180° du conteneur est assuré pour partie, en /**b**/ par le bras robotisé lors de la dépose du conteneur, et pour l'autre partie par un basculeur commandé (51) par un actionneur équipant la table de positionnement (5).

14. Procédé robotisé de chargement d'étuis selon l'une des revendications 1 à 13, dans lequel le système de préhension (2) comprend un préhenseur à ventouse (7) configuré pour assurer la saisie du conteneur lors de /**b**/ lorsque dépendante de la revendication 10, et/ou encore configuré pour la saisie du couvercle et son évacuation lorsque dépendante de la revendication 8.

15. Procédé robotisé de chargement d'étuis selon la revendication 14 dans lequel le préhenseur à ventouse est un préhenseur bi-zones, à deux zones de saisie (70,71) indépendantes et dans lequel le conteneur recevant la rangée d'étuis, ainsi qu'une feuille de protection (Fp) disposée intérieur au conteneur, en intercalaire entre le couvercle et les étuis, et dans lequel la saisie du couvercle détaché par la coupe périphérique est assurée par l'une des deux zones (70,71) du préhenseur à ventouse, et on saisit la feuille de protection (Fp), par l'autre des deux zones (70,71) du préhenseur à ventouse, avant d'évacuer conjointement le couvercle et la feuille de protection par le bras robotisé saisis par les deux zones du préhenseur à ventouses.

16. Procédé robotisé de chargement d'étuis selon l'une des revendications 10 à 15 dans lequel ladite installation comprend deux zones de stockage (Z1, Z2) des conteneurs consistant en une première zone de stockage (Z1) et une deuxième zone de stockage (Z2) chacune recevant des conteneurs (Ca) empilés sur une palette (PL1 ou PL2), chacune des zones de stockage, accessible par le bras robotisé (1) pour la mise en œuvre de /**b**/,
et dans lequel les deux zones de stockage (Z1, Z2) sont séparées par une barrière physique ou une barrière de surveillance virtuelle, les deux zones de stockage présentant respectivement deux entrées indépendantes (E1, E2) pour un opérateur (Op), et dans lequel ladite installation comprend des moyens de détection d'une intrusion de l'opérateur, configuré pour détecter en les distinguant, une intrusion dans la première zone de stockage (Z1) et dans la deuxième zone de stockage (Z2) et dans lequel
le module de pilotage et de commande du bras robotisé est configuré pour travailler en temps masqué dans l'une des deux zones de stockage (Z1, Z2), éventuellement à vitesse réduite, lorsqu'une intrusion est détectée dans l'autre zone de stockage.

17. Utilisation du procédé de chargement d'étuis selon l'une des revendications 1 à 16 sur une ligne d'emballage fonctionnant en continu, ladite ligne d'emballage (Lg) comprenant des moyens assurant :
- la mise en volume des étuis par dépliage de l'étui autour des lignes de pliage (L1, L2, L3, L4),
- le chargement des étuis avec des produits alimentaires via les embouchures (Eb) des étuis,
- - et la fermeture des étuis par repliage et collage des volets de fermeture (Vf).
